# EUROPÄISCHE PATENTSCHRIFT

(11) **EP 3 897 198 B1**
(45) Veröffentlichungstag und Bekanntmachung des Hinweises auf die Patenterteilung: **22.01.2025**
(21) Anmeldenummer: 19820663.3
(22) Anmeldetag: 20.11.2019
(51) Int. Cl.: A23L 17/30, A23B 4/027, A23B 4/023, A23L 3/3508

(54) **VERFAHREN, DAS DER HERSTELLUNG VON KAVIAR ODER EINEM KAVIARÄHNLICHEM PRODUKT AUS LEBENDEN, REIFEN EIERN VON FISCHEN ODER KREBSTIEREN DIENT, UND SOLCHE PRODUKTE**
PROCESS FOR THE PREPARATION OF CAVIAR OR A CAVIAR-LIKE PRODUCT FROM MATURE EGGS OF LIVE AQUATIC ANIMALS AND SUCH PRODUCTS
PROCÉDÉ DE PRÉPARATION DE CAVIAR OU D'UN PRODUIT SEMBLABLE AU CAVIAR À PARTIR D'OEUFS MATURES D'ANIMAUX AQUATIQUES VIVANTS ET PRODUITS SIMILAIRES

(30) Priorität: 17.12.2018 DE 102018132386; 17.12.2018 EP 18212833; 17.12.2018 US 201862780356 P
(43) Veröffentlichungstag der Anmeldung: 27.10.2021
(73) Patentinhaber: Alfred-Wegener-Institut Helmholtz-Zentrum für Polar- und Meeresforschung, 27570 Bremerhaven (DE)
(72) Erfinder: KÖHLER-GÜNTHER, Angela, 24893 Taarstedt (DE)
(86) Internationale Anmeldenummer: PCT/DE2019/100993
(87) Internationale Veröffentlichungsnummer: WO 2020/125848

(56) Entgegenhaltungen:
- EP-B1- 2 522 226
- WO-A1-2007/045233
- DE-A1- 2 416 685
- DUFRESNE L ET AL: "Kinetics of actin assembly attending fertilization or artificial activation of sea urchin eggs", EXPERIMENTAL CELL RESEARCH, ELSEVIER, AMSTERDAM, NL, vol. 172, no. 1, 1 September 1987 (1987-09-01), pages 32 - 42, XP024858354, ISSN: 0014-4827, [retrieved on 19870901], DOI: 10.1016/0014-4827(87)90090-5
- G.E. BLEDSOE ET AL: "Caviars and Fish Roe Products", CRITICAL REVIEWS IN FOOD SCIENCE AND NUTRITION, vol. 43, no. 3, 1 May 2003 (2003-05-01), USA, pages 317 - 356, XP055273360, ISSN: 1040-8398, DOI: 10.1080/10408690390826545
- DATABASE WPI Week 199216, 15 July 1991 Derwent World Patents Index; AN 1992-130346, XP002791935
- DATABASE WPI Week 199629, 20 November 1995 Derwent World Patents Index; AN 1996-285116, XP002791936

## Beschreibung

Verfahren zur Herstellung von Kaviar oder einem kaviarähnlichem Produkt aus lebenden, reifen, ovulierten Eiern von Fischen oder Krebstieren und solche Produkte.

Die Erfindung bezieht sich auf ein Verfahren zur Herstellung von Kaviar oder einem kaviarähnlichem Produkt aus lebenden, reifen, ovulierten Eiern von Fischen oder Krebstieren, die in der Eihülle drei oder mehr Schichten aufweisen, wobei sich die lebenden, reifen, ovulierten Eier in einem befruchtungsfähigen, aber unbefruchteten Zustand befinden und einen natürlichen Kaliumgehalt im Eiplasma aufweisen, mittels Behandlung der lebenden, reifen, ovulierten Eier in einer 0,6 prozentigen bis 1,0 prozentigen Kochsalzlösung und anschließend in zumindest einer Lösung, enthaltend Wasser und zumindest eine darin gelöste, eine Stabilisierung der Eihülle der lebenden, reifen, ovulierten Eier bewirkende kationischen Komponente, und auf Kaviar oder ein kaviarähnliches Produkt.

Die aufbereiteten, unbefruchteten Eier insbesondere von Fischen werden als Delikatesse geschätzt und zunehmend konsumiert. Als "Rogen" werden (laienhaft) die Eier in jedem Reifezustand, also von unreif bis reif, bezeichnet, wobei der Entwicklungsgrad der Eier nicht eindeutig definiert ist. Bei "Laich" handelt es sich um lebende, reife Eier, die vom weiblichen Fisch, Hummer oder anderen Wassertier in ein Gewässer abgelegt wurden, um befruchtet zu werden. Ovulierte Eier sind reife befruchtungsfähige, lebende Eier, die in den Ovarien aus den Follikelhüllen entlassen und in die Leibeshöhle abgegeben wurden. Von dort aus werden sie dann abgelaicht oder abgestreift. Gemäß dem Codex Alimentarius der FAO darf Kaviar nur aus dem Rogen von weiblichen Fischen der verschiedenen Störarten hergestellt werden. Neben den wilden Stören werden mittlerweile auch in Aquakulturanlagen im Süßwasser gezüchtete Störe zur Kaviargewinnung genutzt. Störe laichen bis auf einige wenige Ausnahmen ausschließlich im Süßwasser. Zu den bekanntesten Störarten (*Acipenseridae*) gehören u.a. A. *baerii,* A. *guldenstaedtii, Huso huso* (auch als Beluga-Stör bezeichnet), A. *transmontanus,* A. *ruthenus* und dessen Albino. Zu nennen sind aber auch die Hybride zwischen A. *schrenckii* (weiblich) und A. *dauricus* (männlich) und der mit den Stören eng verwandte amerikanische "Paddlefish" (*Polydon spatula*). Auf dem Markt sind verschiedene Kaviarsorten bekannt, die unter anderem mit Sevruga, Osietra und Beluga bezeichnet werden. Von Albino-Stören wird der weiße Kaviar (auch "goldener Kaviar") gewonnen. Von der Art *A. ruthenus* albino wird vereinzelt in Aquakultanlagen der sogenannte "Zarenkaviar" erzeugt. Hierbei handelt es sich aber nicht um den "echten Zarenkaviar", der vom Albino des *Huso huso* stammt und sehr selten ist.

Derzeit werden von ca. 38 weiteren Fischarten, die nicht zu den Störarten zählen, kaviarähnliche Produkte hergestellt und vermarktet, vergleiche beispielsweise die Veröffentlichung von P. Bronzi et al.: "Present and future sturgeon and caviar production and marketing: A global market overview" (Journal of Applied Ichthyology 2014, 30 SI, 6, 1536-1546). Hierzu zählen Thunfisch, Seehase, Lachs, Forelle, Hering, Dorsch, Karpfen, Maräne und Kapelan, aus deren unreifen Rogen kaviarähnliche Produkte (auch als "Kaviarersatz" oder "falscher Kaviar" bezeichnet) hergestellt werden. Der Rogen vom Hummer, großen Flusskrebsen und anderen Krebstieren lässt sich ebenfalls zu kaviarähnlichen Produkten verarbeiten. Auf diese genannten (und auch weitere geeignete, aber nicht genannte) Fische und Krebstiere beziehen sich das mit der Erfindung beanspruchte Verfahren und die herstellbaren Produkte. Soweit nicht ganz explizit auf Kaviar vom Stör eingegangen wird, sollen im Folgenden regelmäßig sowohl Kaviar als auch kaviarähnliche Produkte von anderen Fischen als dem Stör und von Krebstieren, insbesondere vom Hummer und Edelkrebsen, gemeint und umfasst sein.

Kaviar und kaviarähnliche Produkte sind wertvolle Lebensmittel. Kaviar ist reich an Eiweiß mit einem hohen Anteil an essenziellen Aminosäuren und an Fett. Kaviar enthält die Vitamine D, E, B₁₂ und Niacin, die Mineralstoffe Natrium, Kalium, Magnesium und Calcium sowie die Spurenelemente Phosphor, Fluor, Jod und Zink. Darüber hinaus hat er einen hohen Anteil an wertvollem Cholesterol (HDL). Kaviar und kaviarähnliche Produkte können sowohl als Nahrungsmittel als auch als Substanz in der Kosmetikindustrie oder in anderen Industrien, die mit derartig wertvollen Substanzen arbeiten, eingesetzt werden. Größe und Festigkeit der Eier sind sowohl von der jeweiligen Art des Fisches oder Krebstieres als auch von der Reife und damit vom Zeitpunkt ihrer Ernte stark abhängig.

Auf dem Markt befinden sich derzeit einige Kaviarprodukte aus reifen, ovulierten Eiern von Stören. Heutzutage wird aber vornehmlich nach wie vor Kaviar angeboten, bei dem es sich um unreifen Rogen handelt, der zusammen mit den Eierstöcken von getöteten Stören entnommen wird. Hierbei handelt es sich um die konventionelle Gewinnungsmethode des Kaviars. Zunächst wurde bei Kaviar von Aquakulturstören davon ausgegangen, dass auch hier - wie früher beim Wildkaviar - die unreifen Eier ohne weitere Behandlung eine ausreichende Festigkeit gegenüber den invasiven Waschschritten zur Entfernung der Reste des Gonadengewebes und für die Umverpackung aufweisen. Die zunehmende Erfahrung in der Kaviargewinnung von Stören aus der Aquakultur in den vergangenen 20 Jahren zeigten jedoch, dass dieser unreife Rogen von getöteten Aquakulturstören zu weich ist und nur durch die Verwendung von Borax oder anderen Konservierungsmitteln oder durch Pasteurisierung zu einem für die Umverpackung geeigneten und länger als 2 bis 3 Monate haltbaren Produkt weiterverarbeitet werden kann.

Das Töten von weiblichen Tieren zur Kaviargewinnung bei Wildfängen hat zusammen mit einer drastischen Überfischung, einer Belastung der Gewässer mit industriellen, landwirtschaftlichen und häuslichen Abwässern und einem Wehr- und Dammbau mit der Versperrung der Wanderwege in die Laichgebiete im Süßwasser zu einer massiven Bedrohung der Wildbestände der etwa 27 verschiedenen Störarten geführt. Nach wie vor herrschen in vielen Regionen Wilderei und illegaler Schwarzhandel trotz des Schutzes der Störe durch das Washingtoner Artenschutzabkommen (CITES). Weltweit sind kostenintensive Wiederbesiedlungsprogramme initiiert worden, die aber beispielsweise nach Berichten der World Sturgeon Conservation Society vor allem in China, aber auch im Iran und Russland leider wenig Erfolg zeigen. Lediglich die Maßnahmen zur Konservierung und Wiederbesiedlung der Bestände in den USA und Kanada zeigen erste Erfolge. Neben dem erlaubten Fang von Laichtieren werden verschiedene Störarten auch aus der Aquakultur im Rahmen von Restaurationsprogrammen mit unterschiedlichem Erfolg ins Freiland entlassen, um die vom Aussterben bedrohten Bestände zu retten. Auch die Bestände an Krebsen und Edelkrebsen sind u.a. durch Umweltverschmutzung und eingeschleppte Krankheiten, wie beispielsweise der Krebspest, stark bedroht. Entscheidende Fortschritte in der Krebszucht in der Aquakultur und umfangeiche Besatzmaßnahmen spielen eine wichtige Rolle für den Erhalt einheimischer Bestände. In der Aquakultur werden für die Zucht die weiblichen Tiere am Leben gelassen und die Eier durch Abstreifen gewonnen. Dagegen werden für die Kaviarproduktion in Aquakultur bislang konventionell in aller Regel die weiblichen Störe einfach getötet, weil schonendere Verfahren nicht beherrscht werden. Dabei wird die Tatsache völlig missachtet, dass diese mit zunehmendem Alter eine erheblich verbesserte Reproduktionsleistung zeigen. Auch die speziell in Russland teilweise praktizierte "Kaiserschnitt-Methode" zählt keinesfalls zu den schonenden Methoden, da sie mit einer hohen Sterblichkeit der derart behandelten Störe einhergeht.

### Stand der Technik

Aus der RU 2 232 523 C2 ist eine Methode zur Produktion von granularem Kaviar aus ovuliertem Störrogen bekannt. Hierbei werden die geernteten ovulierten Eier zunächst in einer heißen, 1,5 prozentigen bis 2 prozentigen wässrigen Lösung eines Konservierungsstoffs behandelt, um sie für eine nachfolgende Pasteurisierung bei Temperaturen von 65°C bis 70°C vorzubereiten. Abgesehen von der Tatsache, dass jeder Erhitzungsvorgang den Geschmack des Rogens bedeutsam beeinflusst, ist es bei der Verwendung von ovulierten Eiern, die eine sehr weiche und klebrige Eihülle besitzen, nicht sicher gewährleistet, dass diese die nachfolgenden Behandlungen mit Konservierungsmitteln ohne Platzen überstehen. Aber schon ein geringer Anteil von geplatzten Eiern verschlechtert die Qualität des Kaviars bedeutsam, da die geplatzten Eier nur schwer zu entfernen sind. Die Pasteurisierung führt zu einer Denaturierung der wertvollen Proteine und gibt dem Kaviar einen mehligen Geschmack.

Im Zusammenhang mit der Gewinnung von ovulierten Eier vom Stör ist es beispielsweise aus der Veröffentlichung von M. Szczepkowski et al.: A simple method for collecting sturgeon eggs using a catheter" (Arch. Pol. Fich. (2011) 19:123-128) bekannt, hierfür einen Katheter einzusetzen. Hierdurch können die Eier einfach abfließen oder durch Unterdruck abgesogen werden. Auch ist es bekannt, die Eier aus der Bauchhöhle des Störs einfach herauszumassieren. Diese Methode wird mit "Abstreifen" bezeichnet und ist die schonendste Erntemethode.

Der der Erfindung nächstliegende Stand der Technik wird in der WO 2007/045233 A1 offenbart. Beschrieben wird ein Verfahren zur Herstellung von Kaviar oder kaviarähnlichen Produkten aus reifen ovulierten, aber unbefruchteten Eiern von Wassertieren, bevorzugt Fischen, mittels exogener Behandlung der reifen Eier in einer Lösung, wobei eine endogene, morphologische Veränderung der azellulären Eihülle, die die Eizelle (Eiplasma mit umgebender Eimembran) von der Umgebung abtrennt, mit einer strukturellen Stabilisierung herbeigeführt wird. Dabei enthält die eingesetzte Lösung Wasser und zumindest eine kationische Komponente (Calciumkationen Ca⁺⁺), die im Wasser mit einer vorgegebenen Konzentration gelöst ist und bei Kontakt mit den Eiern die strukturelle Stabilisierung induziert. Calcium ist ein zelleigenes Signaltransduktionsmolekül, das in der Eizelle in ihrem Eiplasma eine Calciumwelle auslöst, die wiederum zu einer Cortikal-Reaktion und zur Entlassung und Aktivierung von Ovoperoxidase führt. Dieses Enzym sorgt in der extrazellulären Eihülle für eine irreversible strukturelle Vernetzung von Proteinsträngen durch den Einbau von Tyrosin-Molekülen in die Zona Radiata Interna und die Zona Radiata Externa. Der induzierte Prozess im lebenden, einen Stoffwechsel aufweisenden Ei führt also zu der gewünschten strukturellen Stabilisierung der Eihülle. Bei unreifen Eiern kann eine derartige Stabilisierung nicht herbeigeführt werden, da die entsprechenden Rezeptoren und Enzymkaskaden noch nicht herangereift sind. Bei abgetöteten Eiern kann der Prozess überhaupt nicht angestoßen werden, da kein Metabolismus mehr stattfindet. Lebende, reife Eier bilden aufgrund der Ovarialflüssigkeit bei einer Berührung mit Wasser sofort eine klebrige Schicht aus, um in der Natur an Steinen und Gewächsen im Laichgebiet festkleben zu können. Die Eier werden deshalb vor Beginn der Behandlung in einer die lebenden Eier nicht schädigenden ("physiologische") Kochsalzlösung gespült, um die Ovarialflüssigkeit zu entfernen. Desweiteren weisen die lebenden, reifen Eier einen natürlichen Kaliumgehalt im Eiplasma auf. Ihnen wurden also vor der Erntung beispielsweise keine schädliche Kaliumdosen (beispielsweise zur Auslösung der Ovulation) von außen zugeführt.

Die beschriebene Reaktionskette wird in der Literatur als "zweite Reaktion" bezeichnet. Es handelt sich um eine langsame metabolische Reaktion, die nach der Fusion eines ersten Spermiums mit der Eizelle eine permanente, physikalischmechanische Struktur zum Schutz der Eizelle gegen weitere außen am Ei aggregierte Spermien (Polyspermie), vor allem aber gegen Umweltgifte, Mikroben und mechanische Beschädigungen des entstehenden Embryos baut. Bei dem bekannten Verfahren wird diese zweite Reaktion ausgelöst, ohne dass eine Befruchtung durch ein Spermium stattgefunden hat. Die erzielte strukturelle Stabilisierung sorgt beim Verzehr des Produkts für einen "Ploppeffekt" und eine explosive Entlassung des flüssigen Eiplasmas. Die Vorliebe für eine spezifische Stärke des Ploppeffektes ist stark vom Einsatz des Kaviars und vom Konsumenten abhängig.

Weiterhin ist es aus der EP 2 522 226 B1 bekannt, den unreifen Rogen von in Aquakultur aufgezogenen Fischen in einer Zusammensetzung aus dem Flavonoid und Antioxidans Taxifolin (Dihydroquercetin) und einem organischen Salz, insbesondere auch Kaliumcitrat, zu konservieren. Dabei führen aber die eingesetzten, hohen Konzentrationen der Zusammensetzung zu eklatanten Veränderungen im intrazellulären lonenmilieu, die den programmierten Zelltod einleiten (Apoptosis). Der dergestalt behandelte Rogen wird also sofort abgetötet. Auch in den Veröffentlichungen SU 1662469 A1 und RU 2 048 111 C1 werden Verfahren zur Konservierung von Störeiern aufgezeigt, bei denen Kaliumverbindungen in so enorm hohen Konzentrationen eingesetzt werden, dass in den Eiern, die in unreifem, nicht ovuliertem Zustand durch Schlachtung gewonnen wurden, sofort die Apoptosis ausgelöst wird und diese absterben. Gleiches gilt auch für die zu der oben genannten RU 2 232 523 C2 korrespondierende EP 2 868 207 B1**,** wobei hier noch eine zusätzliche Denaturierung durch Erhitzung stattfindet.

Die Veröffentlichung von G. E. Bledsoe et al.: "Caviars and Fish Roe Products" Critical Reviews in Food Science and Nutrition, Bd. 43, Nr. 3, 1. Mai 2003, Seiten 317 bis 356) offenbart - im Rahmen der im Vordergrund stehenden Anwendung von Nitrat allgemein als Konservierungsmittel von Eiern von Krabben, Stören und anderen Fischen - auch die Anwendung von Kaliumnitrat. Dies erfolgt aber - wie bei allen Konservierungsvorgängen üblich - in so hohen Konzentrationen oder in untrennbarer Verbindung mit weiteren Konservierungsmitteln, dass eine zelltoxische Wirkung eintritt, die die osmotische Balance empfindlich stört und die behandelten Eier sofort abgetötet. Des Weiteren werden nur unreife Eier in einem frühen Entwicklungsstadium von geschlachteten Fischen konserviert, die zum einen unter Inkaufnahme von Beschädigungen mechanisch aus den Gonaden herausgerieben werden müssen und zum anderen noch keine fertig ausgebildeten Strukturen in der ausgereiften Eihülle aufweisen, sodass sie bei der Erfindung nicht einsetzbar sind.

Das in der DE 2 416 685 A beschriebene Verfahren zielt auf den Ersatz von gesundheitsschädlichen nitrithaltigen Verbindungen zur Erhaltung der roten Farbe der Rogenstränge von Salmoniden ab. Hierbei werden die nitrit- und nitrathaltigen Stoffe durch Verbindungen mit Citraten und Sulfiten als Anion ersetzt. Bei dem eingesetzten Fischprodukt handelt es sich um durch Schlachtung der Fische gewonnene intakte Gonaden, die sogenannten Rogenstränge bzw. Rogensäcke, welche nicht ovulierte Eier enthalten. Die intakten Gonaden werden frisch oder nach dem Auftauen - falls sie vorher eingefroren waren - zunächst in Wasser und einer 3%igen Salzlösung gewaschen werden. Eine 3%ige NaCl Lösung entspricht der mehr als 3-fachen Konzentration physiologischer Kochsalzlösung und ist damit schädigend für lebende Zellen. Die farbstabilisierenden Citrate allein oder zusammen mit Sulfiten als Zusatzstoffe werden als Natrium- oder optional als Kaliumverbindungen in einer gesättigten NaCl-Sole (36,5%), also einer mehr als 40-fachen Konzentration als Kochsalzlösung zur Behandlung der Rogenstränge eingesetzt. Dies führt unmittelbar zum Absterben der Zellen der Rogenstränge und damit zur gewünschten Hemmung der enzymatischen Autolyse (Verderbnis) und zur Abtötung der Mikroorganismen durch Wasserentzug. Die simultane Farbstabilisierung wird mit Natriumsulfit und Natriumcitrat von maximal 0,35% in der Sole und optional mit 0,15 % - 0,30 % Kaliumcitrat in der Sole durchgeführt. Diese Konzentrationen in der von außen angewendeten Spülung entspricht einer Exposition von 15 mmol/l bis 30 mmol/l K⁺-Ionen. In den Rogensträngen wird dabei eine Anreicherung der Citratverbindungen zwischen 300 bis 700 ppm erzielt. Damit handelt es sich also um Zusatzstoffe, die im Endprodukt verbleiben. Die unreifen Eier werden sofort abgetötet.

Aus der JP S63 - 36 763 A ist ein Verfahren zur Reduzierung von Natriumchlorid bei der Konservierung von Fischrogen bekannt, um den Salzgeschmack zu reduzieren. Dabei wird das Natriumchlorid auch durch verschiedene Kaliumverbindungen substituiert. Dies erfolgt allerdings wiederum in so hohen Konzentrationen, dass die Eier, bei denen es sich um unreife Eier handelt, abgetötet werden und keine Stoffwechselarbeit mehr leisten könnten. Aus der JP 2001 - 299 285 A ist ein Verfahren zur Behandlung von in unreifem Zustand gefrorenem Rogen zur Texturverbesserung bekannt. Dabei werden die Eier bei 5°C bis zu 24 h und Einsatz von kaliumhaltigen Chemikalien gespült. Eine derartig lange Behandlungsdauer unterbricht jeden Stoffwechselprozess. Da der Rogen ohne Gefrierschutz eingefroren wurde, besitzen die unreifen Eier ohnehin keine Stoffwechselaktivität mehr und sind auch nicht befruchtungsfähig. Sie sind daher für die beanspruchte Erfindung ebenfalls nicht einsetzbar. Das mit der Erfindung beanspruchte Verfahren beschäftigt sich aber nicht mit der nachgeordneten und abtötenden Konservierung, Entfärbung oder Einfrierung, sondern mit der originären Herstellung von Kaviar und kaviarähnlichen Produkten von unbehandelten reifen lebenden Eiern. Die Konservierung oder Einfrierung nach der Behandlung der lebenden Eier sind bei der Erfindung nur optionale Zusatzschritt. Eine Entfärbung entfällt völlig, da sie nicht erforderlich ist.

Aus der Veröffentlichung von Huang Hui et al.: "Effect of Synthetic Preservatives on Volatile Flavor Compounds in Caviar of Sturgeon" (Huso dauricus × A. schrenckii) ([J] FOOD SCIENCE, 2015, 36(12): 97-103) ist es bekannt, Geschmacksverlusten während der kühlen Lagerung von Kaviar vorbeugen zu wollen, indem eine synthetische Konservierung mit dem Konservierungsmittel Kaliumsorbat (E202, Sorbinsäure) und Ascorbat (Vitamin C) durchgeführt wird. Dabei wurde in verschiedenen Testgruppen konstant 0,5 Promille Kaliumsorbat eingesetzt. Es wurden unreife Eier eingesetzt, die durch die konservierende Behandlung einen intensiveren Geschmack erhalten sollen. Kaliumsorbat gilt als schimmel- und gärungshemmend, kann aber den Geschmack eines Produkts auch verschlechtern.

Die Veröffentlichung von L. Dufresne et al.: "Kinetics of actin assembly attending fertilization or articial activiation of sea urchin eggs"(Experimental Cell Research, Elsevier, Amsterdam, NL, Bd. 172, Nr.1, September 1987, Seiten 32 bis 42) beschäftigt sich mit der künstlichen Aktivierbarkeit von Seeigeleiern. Obwohl sich die vorliegende Erfindung nicht mit der Behandlung von Seeigeleiern beschäftigt, weil diese keine geeignete Struktur (nur Eihülle mit zwei Schichten) zeigen, soll an dieser Stelle kurz auf diese Veröffentlichung eingegangen werden. Zum einen werden Seeigeleier verwendet, die durch Injizieren einer Lösung mit 0,5 M KCI mit einer extrem hohen Kaliumchloridkonzentration in die Bauchhöhle des Seeigels gewonnen wurden. Dadurch wurde das Ei bereits in seinem elektrischen Polarisationszustand stark beeinflusst und sein natürlicher Kaliumgehalt im Eiplasma evident verändert. Des Weiteren geraten alle Seeigeleier vor der Behandlung mit Wasser in Kontakt und bilden eine Gelschicht aus, die anschließend mechanisch wieder entfernt werden muss. Dadurch werden die morphologischen und physiologischen Eigenschaften auch der azellulären Eihülle grundlegend verändert. Die Seeigeleier sind also nicht nur wegen ihrer grundsätzlich anderen Struktur, sondern auch wegen der massiven Eingriffe in den Metabolismus durch Kaliumchlorid während ihrer Erntung bei der Erfindung nicht nutzbar. Des Weiteren ist calciumfreies Meerwasser nicht entionisiert, es enthält pro Liter unter anderem mehr als 10 g Natrium, 0,43 g Kalium und 1,3 g Magnesium und 20 g Chlor. Somit entspricht eine Spülung der Eier in calciumfreien Wasser auch nicht einer Spülung in einer die lebenden, reifen Eier nicht schädigenden Kochsalzlösung.

Die Struktur der Eihülle von Eiern von Fischen und Krebstieren folgt einem Grundmuster und wird für das Verfahren nach der Terminologie gemäß der Veröffentlichung von Siddique et al.: "A review of the structure of sturgeon egg membranes and of the associated terminology", (J. Appl. Ichthyol. (2014), 1-10) beschrieben. Um eine begriffliche Konkordanz herzustellen, soll hier kurz darauf eingegangen werden.

Bei heranreifenden Eiern (Oozyten, Eizellen) in den Ovarien des Tiers umgibt das Follikel, bestehend aus Granulosazellen (auch bezeichnet als Follikelzellen, Follikelhülle, Follikelepithel) und Thecalzellen (auch bezeichnet als externe, interne Theca) das Ei, um es mit Signal- und Nährstoffen zu versorgen. Zwischen den Granulosazellen und den Thecalzellen befindet sich noch die Basis Lamina (in der Wissenschaft auch bezeichnet als perifollikuläre Membran, Membran, basale Lamina). Das Eiplasma (Oozytenplasma, Olemna, Zytoplasma, Eiinneres) ist umgeben von der Eimembran (Oozytenmembran, Plasmamembran PM, zelluläre Eihülle). Bei der Ovulation wird das Ei aus den Follikelzellen herausgelöst und in die Bauchhöhle des Fisches entlassen. Das ovulierte Ei behält nur seine während der Eireifung selbst gebildete azelluläre Eihülle (in der Wissenschaft auch extrazelluläre Matrix oder extrazelluläre Membran genannt), die strukturell von außen nach innen aufgebaut ist aus:
- Alveolarschicht AL (in der Wissenschaft auch bezeichnet als Gelmantel. adhäsive Lage, Gelhülle, (zweite externe) gelatinöse Hülle, Lage 3, Chorion (2)), äußerste Lage der azellulären Eihülle
- Zona Radiata Externa ZRE (in der Wissenschaft auch bezeichnet als externe Vitellinhülle (Zona Radiata = Vitellinhülle), äußere Vitellinzone, externe Vitellinmembran, Lage 2, Chorion Lage 2, Zona Pellucida Externa lat., Zona Radiata Externa lat., Lage 1B der Hülle, zweite Hülle), äußerer Teil der Vitellinhülle, liegt direkt unter der Alveolarschicht
- Epischicht EP (in der Wissenschaft auch bezeichnet als Epilage 1, Lage 4, äußere Lage der ersten Hülle), trennt die ZRE von der ZRA, nicht in allen Eiarten vorhanden
- Zona Radiata Interna ZRI (in der Wissenschaft auch bezeichnet als interne Vitellinhülle, innere vitelline Zone, interne vitelline Membran, Chorion Lage 1, Zona Pellucida Interna lat., Zona Radiata Interna lat., Lage 1A der Hülle, innere Lage der ersten Hülle) , innerer Teil der Vitellinhülle, eng verbunden mit der ZRA und
- perivitelliner Spalt (in der Wissenschaft auch bezeichnet als Extra-Oozyten Matrix, Spalt mit Microvilliausstülpungen des Eiplasmas), schmaler Raum zwischen der ZRI und der Eimembran, in den hinein das Eiplasma zahlreiche Mikrovilli (MV) hineinstülpt.

Lebende ovulierte Eizellen sind elektrisch erregbar durch Ionenkanäle, die in ihrer Plasmamembran lokalisiert sind. Veränderungen der elektrischen Eigenschaften der Plasmamembran stellen unter anderem eine Voraussetzung für eine Eiaktivierung dar und wirken sich in der Eihülle aus. Pionierarbeiten an marinen Wirbellosen demonstrierten Ionenströme von Kaliumkationen durch die Eimembran, welche eine vorübergehende Veränderung des Potenzials über die Membran verursachen (Fertilisation Potential FP). Dieses Potenzial wird durch die Aktivierung eines vorübergehenden spannungsabhängigen Einwärtsstroms in das Eiinnere generiert. Es wurde gezeigt, dass die Depolarisation des Membranpotenzials (RP) aus dem Ionenfluss durch die Eimembran (Ionenstrom (Fertilisation Current FC)) herrührt. Dieser Strom fließt durch die Öffnungen großer unspezifischer und hochgradig leitender Ionenkanäle, die durch Sperma oder künstliche chemische oder mechanische Einwirkungen aktiviert werden können. Die bislang hypothetischen Modelle zur Rolle verschiedener Ionenkanäle und der relevanten Ionen zeigen artspezifische Unterschiede.

In Eizellen spielt Kalium eine zentrale Rolle in der Natur, vergleiche die Veröffentlichung von E. Tosti et al: "Electrical events during gamete maturation and fertilization in animals and humans" (2004 Human Reproduction Update, Vol. 10, No. pp 53-65). Kalium K⁺ ist dasjenige Kation, welches das Ruhepotenzial der Eizelle entscheidend bestimmt. Dabei werden der Kalium⁺-Gradient und die Durchlässigkeit des Eies für Ionen durch Transportproteine und Ionenkanäle reguliert. Nach Untersuchungen am Alfred-Wegener-Institut liegen in reifen unbefruchteten Eiern des Störes *A. baerii* die natürlichen intrazellulären Kaliumkationenkonzentrationen bei 50 mmol/l. Extrazelluläres Calcium hingegen beeinflusst das Ruhepotenzial / Fertilisationspotenzial des Eies nicht und ist selbst auch nicht am ersten schnellen elektrischen Block (siehe unten) beteiligt. Die Ionenzusammensetzung im Inneren der Eizelle unterscheidet sich von der Ionenzusammensetzung in der äußeren Umgebung. Diese Trennung zwischen Zellinnerem und Außenmedium muss für die metabolische Aktivität und damit für das Überleben der Zell aufrechterhalten werden. Die unterschiedliche Verteilung von elektrischen Ladungen innerhalb und außerhalb der Zelle bildet einen elektrischen Gradienten über die Eimembran, der als Potenzialdifferenz messbar ist (Ruhepotenzial).

### Aufgabenstellung

Ausgehend von dem der Erfindung nächstliegenden Stand der Technik gemäß der WO 2007/045233 A1**,** das gattungsbildend ebenfalls der Herstellung von Kaviar und kaviarähnlichen Produkten dient, ist die **Aufgabe** für die vorliegende Erfindung darin zu sehen, das dort beschriebene Verfahren auf der Basis von lebenden, unbefruchteten, reifen, ovulierten Eiern von Fischen oder Krebstieren so weiterzubilden, dass eine Modifikation der Sensorik in Bezug auf Textur, Geschmack, Transport, Lagerung und Tiefgefrierung der reifen, ovulierten Eier erreicht werden kann. Dabei sollen aber die vorbeschriebenen Vorteile der mit dem Verfahren oder anderweitig herstellbaren Kaviare oder kaviarähnliche Produkte, die ebenfalls mit der Erfindung beansprucht werden, erhalten bleiben. Die **Lösung** für diese Aufgabe ist dem Hauptanspruch zu entnehmen. Vorteilhafte Weiterbildungen der Erfindung werden in den Unteransprüchen und in den Produktansprüchen aufgezeigt und im Folgenden im Zusammenhang mit der Erfindung näher erläutert.

Das beanspruchte Verfahren zur Herstellung von Kaviar oder einem kaviarähnlichen Produkt auf der Basis von lebenden, reifen, ovulierten Eiern von Fischen oder Krebstieren die in der Eihülle drei oder mehr Schichten aufweisen, ist erfindungsgemäß dadurch gekennzeichnet, dass in einem Kalium-Expositionsschritt als kationische Komponente Kalium mit einer Konzentration der Kaliumkationen zwischen 0,1 mmol/l und 3,0 mmol/l im Wasser gelöst ist, wobei das Wasser vor der Zugabe eines Kaliumdonators für die Bildung der kationischen Komponente entionisiert ist und eine im Bereich der natürlichen Laichtemperatur der Fische und Krebstiere liegende Temperatur aufweist, und dass die lebenden, reifen, ovulierten Eier in der Lösung für eine Kalium-Expositionszeit zwischen 5 min und 30 min behandelt werden, , wobei abschließend ein Dippen der lebenden, reifen, ovulierten Eier in einer 0,6 prozentigen bis 1,0 prozentigen Kochsalzlösung durchgeführt wird.

Bei dem mit der Erfindung beanspruchten Verfahren werden lebende, reife, ovulierten Eier eingesetzt, die auf natürliche Weise gewonnen werden können, ohne den Fisch oder das Krebstier zu schädigen. Die lebenden, reifen, ovulierten Eier sind befruchtungsfähig, aber unbefruchtet. Die Ovarialflüssigkeit wurde durch eine vorherige Spülung mit einer die lebenden, reifen, ovulierten Eier nicht schädigenden Kochsalzlösung (0,6 prozentig bis 1,0 prozentig) entfernt, sodass sich an der Außenhülle keine klebrige Gelschicht ausbilden kann. Außerdem weisen die ovulierten Eier einen natürlichen, künstlich nicht veränderten Kaliumgehalt auf. Es werden ausschließlich zellphysiologisch wirksame Konzentrationen von Kaliumkationen angewendet. Die lebenden, ovulierten Eier, die bei Fischen und Krebstieren in der Eihülle mehr als zwei Schichten, also drei oder mehr Schichten, aufweisen, werden elektrisch aktiviert. Das Ausgangsprodukt sind lebende, reife, ovulierte, befruchtungsfähige, aber unbefruchtete Eier, deren Stoffwechsel in voller Funktion ist, sodass bereits mit geringsten Kaliumkationen-Konzentrationen, die keinen Schaden anrichten und auch keine Spuren im Ei hinterlassen, Transportprozesse durch die Eihülle und Stoffwechselprozesse im Eiplasma ausgelöst werden können. Der erzeugte oder auf diese Art herstellbare Kaviar oder kaviarähnliche Produkte zeigen eine neue Textur mit einer vorteilhaften stabilisierenden Elastizität durch eine neue hyaline, azelluläre Schicht (elastische Stabilisierungsschicht) in der Eihülle, die bei Zimmertemperatur etwas weicher wird, ohne die Stabilität des Kaviars einzuschränken. Der gewünschte Grad der elastischen Stabilisierung kann problemlos durch Eigentest (Grad der Elastizität der Eier) ermittelt werden. Der Geschmack ist angenehm frisch und würzig, ohne "fischig" zu sein. Durch die Reinheit der verwendeten Eier ergibt sich bereits ohne die Zugabe von Konservierungsstoffen, beispielsweise das in vielen Nationen bereits verbotene Borax, eine lange Haltbarkeit (9 bis 12 Monate) bei Standardtemperaturen zwischen -2°C und -4°C. Die mit dem beanspruchten Verfahren behandelten ovulierten Eier sind zudem erstmals ohne Qualitätsverlust einfrierbar, wodurch sich enorme Vorteile bezüglich Lagerung und Transport ergeben, vergleiche weiter unten.

Durch die erfindungsgemäße Inkontaktbringung der lebenden, reifen, ovulierten Eier mit den Kaliumkationen (K⁺) in physiologischer, d.h. die Zelle nicht schädigender Konzentration (zwischen 0,1 mmol/l und 3,0 mmol/l) werden die ovulierten Eier im Rahmen elektrischer Ereignisse verändert und die sogenannte "erste Reaktion" hervorgerufen, die in kürzester Zeit (Sekunden- bis Minutenbereich) zur elektrisch induzierten Aufhebung der Klebrigkeit bei Wasserkontakt und im weiteren Verlauf der Behandlung zur Ausbildung einer neuen, elastischen Stabilisierungsschicht innerhalb der Eihülle führt. Diese neue Stabilisierungsschicht verleiht der Eihülle Elastizität, sodass sich erfindungsgemäß bereits zu diesem Zeitpunkt ein Kaviar oder ein kaviarähnliches Produkt höchster Qualität ergibt, das auch optionalen Verarbeitungsschritten, insbesondere Konservierung und Tiefgefrierung (bei -18°C) ohne Qualitätseinbußen unterzogen werden kann.

Eine Eiaktivierung umfasst und durchläuft eine ganze Serie von zellbiologischen Kaskaden. Der in der WO 2007/045233 A1 genutzten "zweiten (langsamen) Reaktion" (Slow Block) mit einer Cortikal Reaktion folgt dort die Calcium-abhängige Enzymaktivierung zur Verstärkung und letztlich zum massiven strukturellen Umbau der Eihülle durch irreversibel Tyrosin-vernetzte Proteinstränge in der Zona Radiata Interna und der Zona Radiata Externa In der Natur wird damit die erste Zellteilung für die Embryonalentwicklung vorbereitet. Die bei der vorliegenden Erfindung genutzte "erste (schnelle) Reaktion" (Fast Block, Electrical Block, Fast Electrical Block) mit einer nachfolgenden Depolarisierung / Hyperpolarisierung und deren Verstetigung unterschiedlicher Dauer je nach Tierart steht hingegen am Anfang aller zellbiologischer Kaskaden. Beide Vorgänge unterscheiden sich deutlich aufgrund der eingesetzten Substanzen, nämlich A) Kaliumkationen für die schnelle elektrische Blockierung mit Depolarisation der Eihülle und der dadurch ausgelösten Eiaktivierung und Bildung einer einzelnen, zusätzlichen, neuen Zone in der Eihülle (Bildung einer elastischen Strukturierungsschicht) und B) Calciumkationen für die langsame mechanische Blockierung mit einem enzymatisch gesteuerten, morphologischem Umbau in den vorhandenen Schichten der Eihülle (Bildung einer strukturellen Stabilisierungsschicht).

Das erste elektrische Ereignis (Event) ist eine schnelle Depolarisierung oder sogar Hyperpolarisierung innerhalb von Millisekunden und soll in der Natur nach einer Befruchtung die Anhaftung von weiteren Spermien an das Ei verhindern. Die schnelle Hyperpolarisierung wird von einer verstetigten Hyperpolarisierung innerhalb der folgenden bis zu 60 min (bei einigen Wassertierarten, wie beispielsweise Hummer, sogar bis zu 5 h) abgelöst. Die in der Eiumgebung verbleibenden Spermien können zwar nach dem Fast Electrical Block noch Anheftungen durchführen und im Vitellinmantel der Eihülle (soft coat) steckenbleiben, können aber nicht durch die Plasmamembran des Eies zur tatsächlichen Befruchtung eindringen, wie an Mollusken gezeigt werden konnte. Bei Fortdauer der Kaliumkationen-Exposition gemäß dem mit der Erfindung beanspruchten Verfahren wird beim lebenden, befruchtungsfähigen, aber unbefruchteten und reifen, ovulierten Ei die Bildung einer bislang in der Literatur unbekannten, völlig neuen, hyalinen (durchscheinenden, glasigen, gelartigen) Zone beobachtet (elastische Stabilisierungsschicht), die GAG-positiv (vermehrtes Auftreten von Glucosaminoglykanen) und eosinophil (mit dem roten, sauren diagnostischen Farbstoff Eosin einfärbbar) zur Visualisierung von Zellorganellen, Plasmaproteine, Bindegewebe und dessen Vorstufen), ist, und in der Spermien steckenbleiben würden. Die Bildung dieser elastischen Stabilisierungsschicht ist innerhalb der verstetigten Hyperpolarisation ab 10 s erstmalig in Teilbereichen über die Eihülle ausgebildet und befindet sich nach Vervollständigung zwischen der Zona Radiata Externa und der Alveolarschicht bei lebenden Eier mit einem strukturellen Aufbau wie bei Fischen und Krebstieren (zumindest drei Schichten in der Eihülle). Die Ursache für die Ausbildung der neuen elastischen Stabilisierungsschicht wird in der verstetigten Depolarisation der Eihülle durch die erfindungsgemäße Zuführung von Kaliumkationen in physiologischer Konzentration (zwischen 0,1 mmol/l und 3,0 mmol/l) gesehen.

Nach EU-Rechtsvorschriften der Mitgliedstaaten über Nahrungsergänzungsmittel dürfen nur die dort angeführten Kaliumverbindungen wie beispielsweise Kaliumbicarbonat (Kaliumhydrogencarbonat, KHCO₃) (CAS-Nr. 298-14-6), Kaliumcarbonat (K₂CO₃) (CAS-Nr. 584-08-7), Kaliumcitrat (CAS-Nr.6100-05-6 ), Kaliumhydroxid (KOH) (CAS Nr. 1310-58-3), Kaliumchlorid (KCI) (CAS-Nr. 7447-40-7), K, Kaliumjodid (KI) (CAS-Nr. 7681-11-0), Kaliumjodat (KIO3) (CAS-Nr. 7758-05-6), zu Ernährungszwecken verwendet werden. Ebenso dürfen diese Verbindungen nach dem Vorschlag für eine Verordnung des Europäischen Parlaments und des Rates vom 10.11.2003 (KOM (2003) 671 endgültig) Lebensmitteln zugesetzt werden. Bestimmte Kaliumverbindungen, wie beispielsweise Kaliumcitrat (E 332), Kaliumlactat (E 326), Kaliumorthophosphate (E 340), dürfen ebenfalls Lebensmitteln zu technologischen Zwecken zugesetzt werden. Mit dem erfindungsgemäßen Verfahren zur Behandlung von lebenden, reifen Eiern von Fischen oder Krebstieren mit Kaliumkationen in zellverträglichen Konzentrationen (physiologische Konzentration, also das Ei nicht schädigend) und ohne Rückstandsbildung können Kaviar oder kaviarähnliche Produkte erzeugt werden, die allen nationalen und internationalen Qualitätsanforderungen durch Behörden, Vertreiber und Verbraucher genügen. Die Untersuchungen der intrazellulären Ionenkonzentrationen mit der optischen Emissionsspektroskopie (OES) im Zytoplasma der Eier am Alfred-Wegener-Institut, bei welchen Kalium als neue Substanz zur verstetigten Depolarisation der äußeren Eihülle eingesetzt wurde, zeigen keine Konzentrationsänderungen im Eiplasma nach der Behandlung auch bei unterschiedlichen eingesetzten Konzentrationen und Dauer der Behandlungszeit. Damit gelten die im erfindungsgemäßen Verfahren angewendeten Kaliumkationen eindeutig als technischer Hilfsstoff. Ein technischer Hilfsstoff kommt bei der industriellen Verarbeitung und Herstellung von Lebensmitteln zum Einsatz. Bei den technischen Hilfsstoffen handelt es sich um Lebensmittelzusätze, die zugegeben werden, um technische Prozesse, wie beispielsweise das Schneiden und Filtrieren, zu erleichtern. Im Endprodukt dürfen die technischen Hilfsstoffe jedoch gar nicht oder nur in unvermeidbaren (geringen) Rückständen vorhanden sein. Im Gegensatz zu verändernden Lebensmittelzusatzstoffen, die auch auf der Verpackung deklariert werden müssen, dürfen die technischen Hilfsstoffe keine Wirkung mehr im Endprodukt haben, was von besonderem Vorteil ist. Ihr Einsatz muss technisch unvermeidbar, technologisch unwirksam, gesundheitlich unbedenklich sowie geruchlich und geschmacklich unbedenklich sein. Da die Stoffe in den behandelten Lebensmitteln nicht mehr vorhanden oder wirksam sind, muss ihr Einsatz nicht gekennzeichnet werden. Dies gilt auch für Rückstände, Reaktionsprodukte oder Restgehalte.

Die Behandlung der ovulierten Eier erfolgt bei der Erfindung in einem Lösungsbad (einer wässrigen Lösung, einer Lösung mit Wasser). Die ovulierten Eier werden hineingegeben und solange in dem Lösungsbad belassen, bis sich - in Abhängigkeit von der eingesetzten Eiart - der gewünschte Stabilisierungsgrad (elastisch und ggfs. strukturell) eingestellt hat. Die Eier werden dann einfach dem Bad entnommen. Um eine unerwünschte weitere Stabilisierung nach der Entnahme durch Kationen in der noch anhaftenden Lösung zuverlässig zu vermeiden, wird erfindungsgemäß nach dem Erreichen der gewünschten elastischen (und optional strukturellen) Stabilisierung zur Entfernung der jeweilig eingebrachten Kationen von den reifen, ovulierten Eiern ein Dippen (kurzes Eintauchen) der lebenden, reifen, ovulierte Eier in eine diese nicht schädigenden Kochsalzlösung (physiologische Kochsalzlösung, 0,6 prozentig bis 1,0 prozentig) durchgeführt. Dadurch werden die Kationen abgespült und die von ihnen bewirkten Stabilisierungsprozesse sofort abgebrochen. Der bis dahin erreichte (gewünschte) Stabilisierungsgrad der Eihülle wird als Endzustand zuverlässig erhalten.

Besonders bevorzugt und vorteilhaft ist es, wenn als Kaliumdonator für die Bildung der kationischen Komponente zumindest ein Kaliumsalz, bevorzugt das Salz der Zitronensäure (Kaliumcitrat E332) und/oder das Salz der Salzsäure (Kaliumchlorid E508) und/oder das Salz der Sorbinsäure (Kaliumsorbat E202), im Wasser gelöst ist. Als Kaliumdonator wird eine Verbindung mit Kalium verstanden, die nach ihrer Auflösung in Wasser die Kaliumkationen liefert, wobei deren Konzentration durch die Konzentration der jeweiligen Kaliumverbindung und ihrer Strukturformel im Wasser festgelegt ist. Die genannten Kaliumsalze sind sogar alle als Lebensmittelzusatzstoffe mit E-Nummern zugelassen, obwohl sie bei der Erfindung nur als technische Hilfsstoffe eingesetzt werden, die nicht mehr im Endprodukt auftreten und nicht deklarationspflichtig sind. Eine besonders vorteilhafte und bevorzugte Konzentration der Kaliumkationen in der einen Lösung mit zuvor entionisiertem Wasser liegt gemäß einer nächsten Verfahrensmodifikation bei 0,1 mmol/l, 0,5 mmol/l, 0,65 mmol/l, 1,6 mmol/I oder 2,0 mmol/l, bevorzugt bei 1,0 mmol/I oder 1,5 mmol/l. Dabei sollen bei allen im Rahmen dieser Erfindung gemachten Bereichsangaben (auch andere Parameter) auch immer alle Rand- und Zwischenwerte (ganzzahlig und nicht-ganzzahlig) miterfasst sein. Um die genannten Kaliumkationenkonzentrationen im Wasser herstellen zu können, muss dieses entionisiert sein. Da aber im Wasser ständig auch Wassermoleküle zerfallen, versteht es sich, dass nur ein mit technischen Mitteln umsetzbarer Grad der Entionisierung erreicht werden kann (elektrische Leitfähigkeit im Wasser zwischen 1 µS und 15 µS bei 25°C als Maß für die erreichbare Entionisierung).

Weiterhin liegt bevorzugt und vorteilhaft die Kalium-Expositionszeit im Kalium-Expositionsschritt bei 10 min, 12 min, 15 min, 20 min oder 25 min. Aber auch andere Kalium-Expositionszeiten in dem genannten Bereich sind ohne weiteres wählbar. Die Ausbildung der neuen elastischen Stabilisierungsschicht, die die Eihülle abdichtet, beginnt bereits wenige Sekunden (bis 10 s) nach Behandlungsstart. Da die ovulierten Eier aber nicht alle simultan mit einer verstetigten Depolarisation und Bildung der Stabilisierungsschicht in Teilbereichen der Oberfläche der Einhülle reagieren, empfiehlt sich eine ausgedehnte Behandlungszeit bis zu 10 min zur Erreichung einer verstetigten Depolarisierung in allen behandelten Eiern. Mit zunehmender Behandlungszeit wandert sie nach außen und ist schließlich zwischen der Zona Radiata Externa und der Alveolarschicht in der gesamten Eihülle rund um das Ei lokalisiert. Dadurch werden die lebenden, reifen, ovulierten Eier in einer Weise durch die Erfindung elastisch stabilisiert, dass sie problemlos gesalzen, umverpackt und tiefgefroren werden können.

Als weitere optionale Modifikation ist bei dem mit der Erfindung beanspruchten Verfahren zusätzlich ein Calcium-Expositionsschritt vorgesehen, der nach der Durchführung des Kalium-Expositionsschrittes oder diesem vorausgehend vorgenommen werden kann. Die jeweils bewirkten Veränderungen an der Eihülle treten in beiden Reihenfolgen unabhängig voneinander in ihrer beschriebenen Charakteristik auf. Bevorzugt und vorteilhaft ist im Calcium-Expositionsschritt in einer anderen Lösung mit Wasser Calcium als kationische Komponente in einer die lebenden, reifen Eier nicht schädigenden (also physiologischen) Konzentration (zwischen 0,1 mmol/l und 3 mmol/l) gelöst, wobei das Wasser vor der Zugabe eines Calciumdonators für die Bildung der kationischen Komponente entionisiert ist. Die lebenden, reifen, ovulierten Eier werden im Calcium-Expositionsschritt so lange (zwischen 9 min und 30 min) behandelt, bis eine gewünschte strukturelle Stabilisierung der Eihülle erreicht ist. Der gewünschte Grad der strukturellen Stabilisierung kann problemlos durch Eigentest (Grad des Ploppeffekts der Eier) ermittelt werden. Die Temperatur liegt im Bereich der natürlichen Laichtemperatur der Fische und Krebstiere zwischen 1°C und 29°C. Abschließend wird ein Dippen der lebenden, reifen, ovulierten Eier in einer 0,6 prozentigen bis 1,0 prozentigen Kochsalzlösung durchgeführt.

Im Calcium-Expositionsschritt wird vorteilhaft und bevorzugt als Calciumdonator (Calciumlieferant, Definition siehe Kaliumdonator) zumindest ein Calciumsalz, bevorzugt Calciumcitrat, Calciumchlorid und/oder Calciumsorbat, eingesetzt. Calciumsalze sind in der europäischen Union als Lebensmittelzusatzstoffe unter den Nummern E333 und E509 ohne Höchstmengenbeschränkung und E203 mit einer Höchstmengenbeschränkung zugelassen. Zur besseren Unterscheidbarkeit des Einsatzes der beiden Ionenarten wurden die Rechtschreibformen "Kalium" und "Calcium" (nicht Kalzium) gewählt.

Calcium ist bereits physiologisch in der Eizelle vorhanden und ein wesentlicher Bestandteil im Zellmetabolismus. Aus der oben bereits gewürdigten WO 2007/045233 A1 ist es bekannt, Calciumchlorid einzusetzen und damit eine strukturelle Verfestigung der Eihülle durch irreversible Vernetzung von Proteinen durch den Einbau von Tyrosin-Molekülen zu erreichen. Zusätzlich zu der mit der Erfindung grundsätzlich erreichten verbesserten und einstellbaren Elastizität der Eihülle kann diese durch den Calcium-Expositionsschritt noch strukturell mechanisch verfestigt werden. Somit kann eine optimale, stabilisierende Kombination für bestimmte Kaviarsorten und Kaviarersatz erreicht werden. Dies ist insbesondere von Vorteil bei sehr großen instabilen, ovulierten Eiern (größer 3,2 mm im Durchmesser, beispielsweise Eier vom Beluga-Stör oder dem weißen Stör) oder bei solchen, die im reifen, ovulierten Zustand besonders weich sind (maximale Kraft kleiner oder gleich 0,3 N bis zum Zerplatzen im Härtetest, beispielsweise Eier vom Sterlet-Stör). Dabei ergibt sich durch Anwendung beider Behandlungsschritte ein qualitativ sehr hochwertiger Kaviar oder kaviarähnliches Produkt bei problematischen (Größe, Weichheit) eingesetzten ovulierten Eiern.

Vorteilhaft und bevorzugt beträgt die Konzentration der Calciumkationen in der anderen Lösung 0,5 mmol/l, 0,8 mmol/l, 1,0 mmol/l, 1,5 mmol/l, 1,6 mmol/l oder 2,0 mmol/l. Dabei liegt bevorzugt die Calcium-Expositionszeit bei 10 min, 12,5 min, 15 min, 16 min, 20 min oder 25 min. Es ist bei der Wahl der Behandlungsdauer zu berücksichtigen, dass die Festigkeit der Eihülle mit zunehmender Calcium-Expositionszeit bis zum Erreichen eines Grenzwertes stetig zunimmt. In der Natur wird bei befruchteten Eiern von Fischen nach ca. 60 min eine stark ausgehärtete Eihülle erreicht, die nicht mehr zum Verzehr geeignet ist. Beim Hummer kann dies bis zu 24 h dauern.

Ein wesentlicher Verfahrensparameter bei dem mit der Erfindung beanspruchten Verfahren ist die Temperatur der Lösungen, in der die reifen Eier behandelt werden. Diese soll physiologisch sein, das heißt, dass sie die natürlichen Vorgänge in den lebenden Eiern nicht behindert. Bei dem beanspruchten Verfahren liegt die Temperatur der Lösungen immer im Bereich der natürlichen Laichtemperatur von Fischen oder Krebstieren. Dadurch ist gewährleistet, dass die im Kalium-Expositionsschritt hervorgerufene elektrische Aktivierung der Eihülle mit einer beim Ruhepotenzial startenden Depolarisation zuverlässig erfolgt. Bei unnatürlichen Laichtemperaturen, beispielsweise bei Fischen oder Krebstieren aus den polaren Regionen oberhalb von 15°C, findet hingegen keine elektrische Eiaktivierung statt, die lebenden reifen, ovulierten Eier lassen sich nicht elektrisch oder enzymatisch stabilisieren. Sie werden atretisch. Analoges gilt für die ovulierten Eier von Fischen oder Krebstieren aus den gemäßigten und tropischen Zonen. Grundsätzlich gilt, dass bei Temperaturen der Lösungen oberhalb von 35°C die ovulierten Eier durch Degeneration starke Qualitätsverluste erfahren.

Zur Anpassung der Temperaturen der Lösungen an die natürlichen Habitate werden bei der vorliegenden Erfindung die Lebensbereiche der Fische und Krebstiere während der Zeiten der natürlichen Fortpflanzung, deren lebende, reife, ovulierte Eier eingesetzt werden können, grob in drei Klimazonen unterteilt: polare Zonen (an den Polen), gemäßigte Zonen (zwischen den polaren Zonen und der tropischen Zone), tropische Zone (um den Äquator). Bei der vorliegenden Erfindung wird bevorzugt und vorteilhaft umgesetzt, dass die Temperatur der einen Lösung (Kalium-Exposition) und/oder der anderen Lösung (Calcium-Exposition) in einem polaren Temperaturbereich zwischen 1°C und 15°C, bevorzugt zwischen 5°C und 12°C, besonders bevorzugt 10°C, einem gemäßigten Temperaturbereich zwischen 10 und 20°C, bevorzugt 15°C, besonders bevorzugt 12 °C, oder einem tropischen Temperaturbereich zwischen 20°C und 29°C, bevorzugt 27°C, besonders bevorzugt 21°C, entnommen ist. Temperaturen, die zu einer Veränderung - Degenerierung, Zelltod - der Eier führen, wie es beispielsweise beim Pasteurisieren durch Erhitzen auf Temperaturen oberhalb von 40°C der Fall ist, werden bei der Erfindung zu jedem Verfahrenszeitpunkt vermieden.

Da bei dem Verfahren nach der Erfindung die eingesetzten Kationenkonzentrationen tierspezifische physiologische Reaktionen elektrischer (Kalium-Exposition) und metabolischer (Calcium-Exposition) Natur auslösen und damit die Verarbeitung zu einem stabilen verzehrfähigen Endprodukt beeinflussen, muss immer als von entionisiertem Wasser in der Lösung ausgegangen werden, um eine exakte Konzentration von elektrisch (Kalium) oder metabolisch (Calcium) aktiven Kationen (positiv geladen) zu erreichen. Technisch erreichbar und damit bevorzugt und vorteilhaft ist es deshalb, wenn das entionisierte Wasser bei 25°C eine elektrische Leitfähigkeit zwischen 1 µS/cm und 15 µS/cm, bevorzugt 10 µS/cm oder darunter, besonders bevorzugt 1 µS/cm, aufweist. Trink- und Brunnenwasser besteht je nach regionaler Quelle aus einer stark unterschiedlichen Zusammensetzung von verschiedenen Ionen, die unter Umständen sogar antagonistische Wirkungen auf den Zellmetabolismus haben können. Bei einer Temperatur von 25°C beträgt die elektrische Leitfähigkeit beispielsweise von reinstem Wasser 0,055 µS/cm, entionisiertem Wasser 1 µS/cm, Regenwasser 50 µS/cm oder von Trinkwasser 500 µS/cm. Um reproduzierbare Ergebnisse bei dem beanspruchten Verfahren erhalten zu können, ist es wichtig, das entionisierte Wasser in seiner elektrischen Leitfähigkeit zu kennen.

Da mit dem mit der Erfindung beanspruchten Verfahren lebende Zellen in Form von aktivierbaren reifen, ovulierten Eizellen behandelt werden, ist es unter anderem auch wichtig, dass die Lösungen dem Metabolismus der Zellen angepasst sind, damit die beim Verfahren induzierten Stoffwechselprozesse auch stattfinden können. Daher ist es von Vorteil und bevorzugt, wenn die eine und/oder die andere Lösung einen (physiologischen, dem lebenden Organismus nicht abträglichen) pH-Wert zwischen 6,8 und 8,0, bevorzugt zwischen 7,0 und 7,9, besonders bevorzugt 7,2 oder 7,4 oder 7,5, aufweist. Insbesondere ist der in der Lösung eingestellte pH-Wert relevant für die langsame metabolische Reaktion im Calcium-Expositionsschritt. Da enzymatische Prozesse in der Zelle stark vom pH-Wert reguliert werden, wurde auch der intrazelluläre pH-Wert im Kalium-Expositionsschritt (elektrischer Prozess) untersucht. Der pH-Wert im Eiplasma der mit den verschiedenen kaliumhaltigen Substanzen in verschiedenen Konzentrationen und unterschiedlicher Dauer behandelten Eier bleibt aber im Wesentlichen unverändert im pH-Wert-Optimum zwischen 7 und 8 und zeigt die erwarteten individuellen Unterschiede bei einzelnen Fischen und Krebstieren.

Bei der Erfindung dienen die verschiedenen Expositionsschritte der endogenen, Stabilisierung (elastisch und optional strukturell) der Eihülle der lebenden, reifen, ovulierten Eier. Damit ist der Kaviar oder das kaviarähnliche Produkt bereits fertig für eine weitere Verarbeitung, wie der Salzung und Verpackung. Während der Ovulation werden die lebenden reifen Eier von den Follikelzellen herausgedrückt, sodass keine Gewebereste von Blutgefäßen oder Follikelzellenreste mehr anhaften, an denen Bakterien oder Pilze siedeln könnten. Deshalb verfügen geerntete ovulierte Eier über eine große Reinheit und damit über die besten Voraussetzungen für eine lange Haltbarkeit. Diese wird sicher gewährleistet, wenn anschließend an den zuletzt durchgeführten Expositionsschritt zur Konservierung und Geschmacksintensivierung eine milde Salzung mit bezogen auf eine Menge Kaviar oder kaviarähnlichem Produkt 2,0 % bis 3,8 %, bevorzugt 3,5 %, Natriumchlorid durchgeführt wird. Dabei muss das Natriumchlorid frei von Kalium- und Calciumdonatoren, wie sie beispielsweise in Rieselhilfen enthalten sind, sein, da dadurch eine unkontrollierte Veränderung der Eihülle der behandelten ovulierten Eier durch die Salzung vermieden wird. Bei Kaviar aus Eiern von Stören wird eine trockene Salzung mit einfachem Kochsalz (Natriumchlorid NaCl) durchgeführt, eine nasse Salzung wird oft bei der Verarbeitung vom Rogen anderer Fischarten zu kaviarähnlichen Produkten wie Lachs- und Forellenkaviar durchgeführt. Die bei der Erfindung vornehmbare Salzung in dem genannten Bereich ist eine ganz leichte Salzung, die auch mit "Malossol" bezeichnet wird und ein eindeutiges Anzeichen für eine hohe Güte ist. Eine Pasteurisierung oder Erhitzung auf eine Temperatur von 60°C und darüber entfällt bei dem mit der Erfindung beanspruchten Kaviar oder kaviarähnlichen Produkt völlig, da diese nicht nötig ist und nur der Qualität des Produktes und dessen Sensorik schaden würde. Durch die Malossol-Salzung erhalten die mit dem beanspruchten Verfahren hergestellten Kaviare oder kaviarähnlichen Produkte bei einer Lagerung bei -2°C eine Mindesthaltbarkeitsdauer von mindestens 9 bis 12 Monaten. Durch die nur leichte Salzung gefrieren sie dabei nicht.

Eine weitere Verbesserung der Güte des hergestellten Kaviars oder des kaviarähnlichen Produkts ergibt sich bei der Erfindung, wenn gemäß einer weiteren Modifikation bevorzugt und vorteilhaft anschließend an die Konservierung und Geschmacksintensivierung eine Lagerung des Kaviars oder des kaviarähnlichen Produkts in luftdicht verschlossenen Glasbehältern über mehrere Monate, bevorzugt ein bis drei Monate, durchgeführt wird. Durch die Lagerung "reift" der Kaviar nach und gewinnt in Abhängigkeit des Reifgrads an Geschmackintensität. Dieses Reifen ist aber im Sinne einer weiteren geschmacklichen Weiterbildung zu sehen (wie beim Käse beispielsweise) und hat nichts mit dem "Reifegrad" der bei der Erfindung einsetzbaren reifen Eier im Sinne einer biologischen Entwicklung zu tun. Hier bezieht sich die Reife auf die Möglichkeit zur Befruchtung und damit auf den Entwicklungsstand der lebenden Eier. Bei der geschmacklichen Reifung erfolgt die Lagerung in Glasbehältern, die dem Kaviar ausreichend Raum zur Reifung bietet, da er nicht gepresst wird (wie bei einer Verpackung in metallischen Stülpdeckeldosen) und so seine geschmacksintensiven Öle behält. Der so in Glas verpackte Kaviar nach der Erfindung ist nicht zu verwechseln mit pasteurisiertem Kaviar, der ebenfalls häufig in Glas verpackt wird. Des Weiteren wird bei der Lagerung in umweltfreundlichen Glasbehältern der oft bemängelte metallische Geschmack des konventionell in Metallbehältern verpackten Kaviars vermieden.

Gemäß einer nächsten Verfahrensmodifikation ist es bevorzugt und vorteilhaft, wenn anschließend an die Konservierung und Geschmacksintensivierung oder die Lagerung und geschmacklichen Reifung ein Einfrieren des Kaviars oder des kaviarähnlichen Produkts in einem Temperaturbereich zwischen - 20° und -15°C, bevorzugt bei -18°C, durchgeführt wird. Idealerweise reift der Kaviar geschmacklich für den menschlichen Genuss bis zum gewünschten Reifegrad des jeweiligen Kunden und wird entweder frisch nach 14 Tage nach Produktion oder nach maximal 3-4 Monaten Reifung eingefroren. Der Kaviar wird entweder in 500 g großen Glasgefäßen vor der Umverpackung eingefroren oder nach der Umverpackung für den Endkunden in 30 g, 50 g, 125 g, 250 g oder 500 g (ggfs. bis 1000 g) Gläsern, die sich vakuumieren lassen. Unter konventioneller Schlachtung gewonnener Kaviar kann nicht eingefroren werden. Pasteurisierter oder erhitzter Kaviar kann zwar eingefroren werden, zeigt aber extreme Güteeinbußen durch die Wärmebehandlung. Durch die Möglichkeit des Einfrierens des Kaviars oder des kaviarähnlichen Produkts nach der Erfindung ist eine optimale Kaviarvermarktung möglich, die den heutigen Ansprüchen von Convenience Food entspricht. Die Vermarktung stößt bislang aufgrund der spezifischen, genau einzuhaltenden Transport- und Lagerungstemperaturen von -2°C bis -4°C an Grenzen, da diese bei den meisten Anbietern nicht vorgehalten werden. Deshalb wird konventionell gewonnener Kaviar mit bedenklichen Konservierungsmitteln, wie beispielsweise Borax, behandelt oder pasteurisiert, um ihn wenigstens über einen Zeitraum von 12 Monaten und länger haltbar machen zu können. Der mit der vorliegenden Erfindung hergestellte Kaviar kann indessen einfach eingefroren und so über einen längeren Zeitraum gelagert und frisch gehalten werden. Versuche haben gezeigt, dass bei +4°C bis +7°C langsam im Kühlschrank aufgetautem Kaviar keine Geschmacksverluste oder Texturveränderungen auftreten.

Die bei der Erfindung einsetzbaren lebenden, reifen, ovulierten Eier sind befruchtungsfähig, aber unbefruchtet. Außerdem sind sie wasserunbenetzt und weisen einen natürlichen Kaliumgehalt im Eiplasma auf. Derartige lebende Eier können aus den Gonaden in die Bauchhöhle des Fisches entlassen und von dort über die Genitalöffnung geerntet werden. Dies kann beispielsweise über natürliches Ablaichen, durch Abstreifen (Massage der Bauchhöhle von außen) oder Verwenden eines Katheters, über den die Eier aus der Bauchhöhle abgelassen oder abgesaugt werden, erfolgen. Bei aus den Gonaden in die Bauchhöhle entlassenen Eiern spricht man von ovulierten Eiern (Reifegrad 5), die noch eine schleimige Ovulationsflüssigkeit umgibt. Um eine die Ausbildung einer klebrigen Schicht auf den Eiern bei Kontakt mit Wasser zu vermeiden, wird die Ovulationsflüssigkeit vor Beginn der Behandlung mit physiologischer Kochsalzlösung (0,6 prozentig bis 1,0 prozentig) abgespült. Ovulierte Eier können vom lebenden Tier gewonnen werden, was besonders nachhaltig ist. Eine gute Übersicht über die verschiedenen Reifegrade beim Kabeljau ist der Veröffentlichung von I.G. Katsiadaki et. al.: "Assessment of quality of cod roes an relationsship between quality and maturity stage" (J. Sci Food Agric 79:1249-1259 (1999)), insbesondere dort der Tabelle 1 zu entnehmen. Eine numerische Definition des Reifegrades ist mithilfe des sogenannten "Polarisationsindexes" möglich. Dieser errechnet sich aus dem Verhältnis des Abstandes zwischen Zellkern und Zellmembran zum Durchmesser des Eis zwischen dem animalen und dem vegetativen Pol (große Halbachse). Deshalb ist es gemäß einer nächsten Erfindungsausgestaltung bevorzugt und vorteilhaft, wenn lebende, reife, ovulierte Eier von Fischen oder Krebstieren mit einem Polarisationsindex PI mit 0,05 ≤ PI ≤ 0,15, bevorzugt 0,05 ≤ PI ≤ 0,12, behandelt werden. Eier mit diesem PI sind besonders geeignet für eine Erntung für eine Behandlung nach der Erfindung. Nähere Informationen über den Polarisationsindex PI von Eiern sind beispielsweise den Richtlinien für Störzucht (Veröffentlichung **FAO** Ankara 2011 Fisheries and Aquaculture Technical Paper 570 "Sturgeon Hatchery Practises and Management for Release - Guidelines") zu entnehmen.

Mit dem mit der Erfindung beanspruchten Verfahren können die lebenden, reifen Eier von Fischen und Krebstieren (wissenschaftlicher Name *Crustacea*) behandelt werden, deren Eier die für die Erfindung erforderliche Grundstruktur (mehr als zwei Schichten in der Eihülle) haben und die in Form von Kaviar oder kaviarähnlichen Produkten zum Verzehr geeignet sind. Bevorzugt und vorteilhaft können lebende, reife, ovulierte Eier von Fischen oder Krebstieren aus Wildfängen oder aus Aquakulturzucht behandelt werden, die in ovuliertem Zustand durch Abstreifen oder andere gezielte Erntung, wie beispielsweise Katheterisierung, gewonnen wurden. Dabei können beispielsweise auch solche Tiere beerntet werden, die für einen Wiederbesatz in der freien Natur, beispielsweise einem Restocking-Projekt, vorgesehen sind. Der Erlös aus den Verkäufen von Kaviar und kaviarähnlichen Produkten kann dann wieder den Besatzmaßnahmen zugeführt werden. Besonders bevorzugt und vorteilhaft ist es, wenn bei dem beanspruchten Verfahren lebende reife, ovulierte Eier von rezenten und urtümlichen lebenden Knochenfischen, bevorzugt von lebenden Störartigen, behandelt werden. Dann kann mit dem Verfahren (echter) Kaviar höchster Güte erzeugt werden. Aber auch kaviarähnliche Produkte vom Hummer oder anderen Krebstieren, z.B. Edelkrebse, können mit dem beanspruchten Verfahren nach der Erfindung in höchster Qualität hergestellt werden. Weiterhin können bevorzugt und vorteilhaft sehr große (oberhalb 3,2 mm Durchmesser) oder weiche, instabile, ovulierte Eier (Textur im Härtetest unter 0,3 N, darüber zerplatzen die Eier) behandelt werden, da das mit der vorliegenden Erfindung beanspruchte Verfahren optional auch zwei Expositionsschritte mit sowohl einer elastischen (elektrisch stimulierte) als auch einer strukturellen (enzymatisch stimuliert) Stabilisierung der Eihülle umfassen kann.

Schließlich werden mit der Erfindung auch unterschiedliche Produkte aus lebenden, reifen, ovulierten Eiern von Fischen oder Krebstieren, die in der Eihülle drei oder mehr Schichten aufweisen, beansprucht, die mit dem beanspruchten Verfahren aber auch mit anderen Verfahren hergestellt werden können. Die Produkte sind dadurch charakteristisch gekennzeichnet, dass in der Eihülle zusätzlich eine elastische Stabilisierungsschicht in Form einer eosinophilen, hyalinen Schicht mit eingelagerten Glucosaminoglykanen ausgebildet ist. Dabei ist das lebende Ei aber unbefruchtet, weshalb die elastische Stabilisierungsschicht in der Natur nicht auftritt. Bei der Erfindung liegt die elastische Stabilisierungsschicht zwischen der Zona Radiata Interna und der Alveolarschicht, bevorzugt zwischen der Zona Radiata Externa und der Alveolarschicht. Sie kann also nur bei lebenden Eier mit einer mehr als zweischichtigen Struktur der Eihülle auftreten. Seeigel beispielsweise weisen nur genau zwei Schichten in der Eihülle auf. Die neue Stabilisierungsschicht ist transparent, gelartig und elastisch ausgebildet und kann mit Eosin rot und mit Alcian blau histologisch gefärbt werden. Bei einer Herstellung mit dem mit der Erfindung beanspruchten Verfahren wird ihre Ausprägung von der eingesetzten Kaliumkation-Konzentration im Kalium-Expositionsschritt beeinflusst, ihre Lage wird von der Kalium-Expositionszeit beeinflusst.

Zur Entfernung der Ovarialflüssigkeit werden die lebenden reifen, ovulierten Eier vor der Behandlung mit einer die Eier nicht schädigen Kochsalzlösung (0,6 prozentigen bis 1,0 prozentigen) behandelt. Dabei handelt es sich um eine physiologische Kochsalzlösung. Weiterhin ist es vorteilhaft und bevorzugt, wenn die Kochsalzlösung als 0,9 prozentige Kochsalzlösung ausgebildet ist. Zur Herstellung einer 0,9 prozentigen Kochsalzlösung werden 9 g Natriumchlorid (NaCl) pro 1 l eingesetztem Wasser aufgelöst. Diese Konzentration entspricht dem natürlichen Auftreten im menschlichen Organismus, es wird daher von einer "physiologischen" Kochsalzlösung gesprochen.

Weiterhin wird Kaviar oder ein kaviarähnliches Produkt aus unbefruchteten, reifen, ovulierte Eiern von Fischen oder Krebstieren, die in der Eihülle drei oder mehr Schichten aufweisen, beansprucht, der dadurch gekennzeichnet ist, dass in der Eihülle zusätzlich eine irreversible Vernetzung von Proteinsträngen durch eingebaute Tyrosin-Moleküle ausgebildet ist. Dabei ist diese zusätzliche irreversible Vernetzung in der Zona Radiata Interna und der Zona Radiata Externa der lebenden, ovulierten Eier von Fischen oder Krebstieren lokalisiert. Die irreversible Vernetzung führt zu einer zusätzlichen strukturellen Stabilisierung der Eihülle. Zusammen mit der vorhandenen elastischen Stabilisierung können damit auch besonders große oder weiche ovulierte Eier behandelt werden. Der Kaviar oder das kaviarähnliche Produkt kann mit dem beanspruchten Verfahren hergestellt werden, wobei der strukturelle Stabilisierungsgrad in der Eihülle dann von der Calcium-Expositionszeit und der Calciumkationen-Konzentration im Calcium-Expositionsschritt abhängig ist. Andere Verfahren zur Herstellung von Kaviar oder einem kaviarähnlichen Produkt mit derselben Ausprägung einer irreversiblen Proteinvernetzung in der Eihülle sind ebenfalls anwendbar. Weitere Ausführungen zu den mit der Erfindung beanspruchten Verfahren und Produkten sind dem nachfolgenden speziellen Beschreibungsteil zu den Ausführungsbeispielen zu entnehmen.

### Ausführungsbeispiele

Nachfolgend werden das Verfahren zur Herstellung von Kaviar oder einem kaviarähnlichen Produkt aus lebenden, reifen, ovulierten Eiern von Fischen oder Krebstieren und derartige Produkte nach der Erfindung und ihre vorteilhaften Modifikationen zum weiteren Verständnis der Erfindung an Ausführungsbeispielen und Figuren noch weitergehend erläutert. Dabei zeigt die
- **Fig** 1A, B, C: REM-Aufnahmen zum Vergleich gewonnener lebender Eier im unreifen und im reifen Zustand (Stand der Technik),
- **Fig**. 2: eine erste Tabelle zu Messungen der Eihüllendicke bei Behandlung von lebenden, reifen Eiern vom sibirischem Stör,
- **Fig.** 3: eine zweite Tabelle zu Messungen der Eihüllendicke bei Behandlung von lebenden, reifen Eiern vom Beluga-Stör,
- **Fig.** 4A, B, C, D: REM-Aufnahmen der Behandlungsserien zur Bildung der Stabilisierungsschicht von unterschiedlich behandelten lebenden, reifen Eiern des Störs durch Kaliumkationen-Behandlung im Vergleich zur der Doppelbehandlung mit Kalium- und Calciumkationen sowie Calciumkationen allein,
- **Fig.** 5A, B, C, D: TEM-Aufnahmen zum Aufbau der Schichten der Eihülle mit der Bildung der neuen Stabilisierungsschicht (SS) zwischen der Zona Radiata Externa (ZRE) und der Alveolarschicht (AL),
- **Fig.** 6A, B, C, D: TEM-Aufnahmen der Cortikal Granula von unbehandelten und unterschiedlich (Kaliumkationen allein, Doppelbehandlung mit Kalium- und Calciumkationen, Calciumkationen alleine) behandelten reifen Eiern des Störs,
- **Fig** 7A, B, C, D: lichtmikroskopische Aufnahmen von unbehandelten reifen Eiern vom sibirischen Stör und von mit Kaliumionen behandelten lebenden, reifen Eiern vom sibirischen Stör,
- **Fig.** 8A, B, C, D: lichtmikroskopische Aufnahmen von mit Calciumkationen behandelten lebenden, reifen Eiern und von mit Kaliumkationen und mit Calciumkationen behandelten lebenden, reifen Eiern vom sibirischen Stör und
- **Fig.** 9A, B: REM- und lichtmikroskopische Aufnahmen des Aufbaus der Eihülle beim Beluga-Stör nach einer Behandlung der lebenden, reifen Eier mit Kalium- und Calciumkationen.

Aus Untersuchungen der Beziehungen zwischen dem Gewicht bzw. dem Alter von Stören und der Größe des Kaviarkornes bzw. der Menge des geernteten Kaviars ist bekannt, dass mit zunehmenden Gewicht bzw. Alter der Störe der Eidurchmesser zunimmt und damit die Qualität des Kaviars. Weiterhin nimmt mit zunehmenden Gewicht bzw. Alter der Störe die Menge des geernteten Kaviars zu und damit der ökonomische Erfolg. Störe werden in der natürlichen Umgebung erst mit 12 bis 26 Jahren je nach Spezies das erste Mal geschlechtsreif. Die Wachstumsphase bis zur ersten Reproduktion verbringen die meisten Störe im Meer oder in Ästuaren und wandern dann in die Flüsse ein, um ihre Laichgebiete auf steinigem Grund im Süßwasser zu finden. Aber auch in der Aquakultur benötigen Störe etwa 5 bis 16 Jahren je nach Störart bis zur ersten Geschlechtsreife und damit zur ersten Kaviarernte. Die wiederholte Ernte von Kaviar in der Aquakultur von lebenden Weibchen über viele Jahre setzt tierfreundliche Haltung der Fische mit optimaler Fütterung und niedriger Besatzdichte voraus und ist aufgrund der späten Geschlechtsreife und langen Lebensdauer immer ökonomisch und ökologisch sinnvoll. Eine Produktion von Kaviar im ökonomisch interessanten Tonnenbereich ist leicht möglich bei einem koordinierten Arbeitsablauf von Ernte und Behandlung der abgestreiften Eier zu Kaviar. Durch geeignete Upscaling-Maßnahmen kann eine Tagesproduktion von 80 kg und mehr je nach Alter der Fische und der damit verbundenen Kaviarmenge erreicht werden.

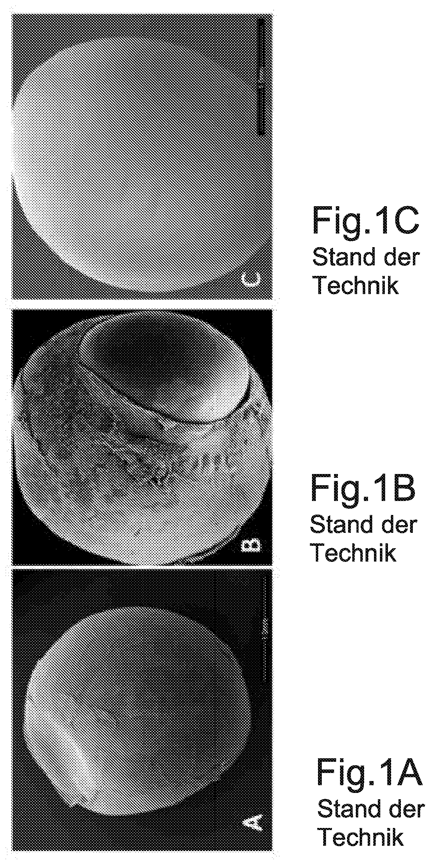

Beim beanspruchten Verfahren werden lebende, reife Eier eingesetzt, die zuvor mit physiologischer Kochsalzlösung gereinigt wurden. Hierbei handelt es sich dann um ovulierte Eier, die zuvor aufgrund ihres Reifestadiums (Stadium der Ovulationsbereitschaft und Befruchtungsfähigkeit und) von feinen Muskelfasern der Follikelzellen aus der Gonade herausgedrückt werden, ein Prozess, der als Ovulation bezeichnet wird. Die ovulierten Eier werden ohne Zellreste und andere Rückstände in die Eileiter und die Bauchhöhle des Fisches entlassen. Von dort können sie dann durch Massage des Bauches abgestreift werden, ohne das Leben des Fisches zu beeinträchtigen. Die völlig saubere Oberfläche der Eier bietet keine Nischen und Falten für den Befall durch Bakterien und Pilze, weshalb sich eine hohe Haltbarkeit des Kaviars oder des kaviarähnlichen Produkts ergibt, Eine Verwendung von Konservierungsmethoden z.B. mit Borax, das für die menschliche Gesundheit schädlich ist, ist nicht erforderlich. In den Fig. 1A, B, C sind aus dem Stand der Technik Rasterelektronenmikroskopische (REM) Aufnahmen eines lebenden Eies und des Ovulationsprozesses dargestellt. Die Fig. 1A zeigt eine unreife Eizelle mit Follikelzellen, wie sie beim konventionellen Kaviar vom getöteten Stör auftreten. Die **Fig.** 1B zeigt in-situ die Ovulation und Entlassung der reifen Eizelle aus der umgebenden Follikelzelle. Die **Fig.** 1C zeigt dann ein lebendes, reifes Störei, das ersichtlich völlig glatt und sauber ist.

An einem Ausführungsbeispiel mit lebenden, reifen Eiern nach der Ovulation wird nachfolgend ein möglicher Verfahrensablauf des beanspruchten Verfahrens mit einigen optionalen Zusatzschritten näher erläutert:
- Abstreifen vom lebenden Störweibchen von lebenden Eiern im Reifestadium V nach der Auflösung der Germinalvesikel,
- unmittelbarer Transport der abgestreiften lebenden, ovulierten Eier zusammen mit der Ovarialflüssigkeit in ein Kaviarlabor (Standzeiten werden weitgehend vermieden, unvermeidliche Standzeiten erfolgen auf Eis und unter Sauerstoffausschluss durch Abdecken der Ovarialflüssigkeit mit einer luftundurchlässigen Kunststofffolie),
- unmittelbare gründliche Spülung der lebenden, ovulierten Eier in 0,9 prozentiger, physiologischer Kochsalzlösung, bis die Ovarialflüssigkeit vollständig entfernt ist,
- Durchführen des Kalium-Expositionsschritts:
   - Herstellen einer 0,1 bis 2 millimolaren Kaliumkationen-Lösung aus Kaliumcitrat in entionisiertem Wasser mit einer Leitfähigkeit von 10 µS/cm (bei 25°C) und einer Temperatur im polaren Temperaturbereich von 10°C,
   - Einbringen der lebenden, reifen, ovulierten Eier in die Lösung für eine Kalium- Expositionszeit von 10 min und
   - Herausnehmen der behandelten Eier aus der Lösung und
- kurzes Dippen der behandelten Eier in eine 0,9 prozentige, physiologische Kochsalzlösung.

Anderen Gewinnungsmethoden für die reifen, ovulierten Eier sind ebenfalls möglich. Auch bei einem Einsatz von lebenden, reifen, ovulierten Eiern von einem zuvor getöteten Tier müssen Blut und Fett abgespült werden, was durch die Vorbehandlung mit einer bevorzugt physiologischen Kochsalzlösung erreicht wird. Durch das Dippen können die Elastizität und der Durchmesser der Stabilisierungsschicht zusätzlich (also neben der Wahl der Dauer der Expositionszeit) kontrolliert werden. Durch die beschriebene Behandlung bildet sich bei den lebenden ovulierten Eiern aufgrund der elektrischen Beeinflussung durch die eingebrachten Kaliumkationen eine hyaline, elastische Stabilisierungsschicht zwischen der Zona Radiata Externa und der Alveolarschicht in der Eihülle aus. Bei ovulierten Eiern normaler Größe und Weichheit genügt eine Behandlung mit dem Kalium-Expositionsschritt. Werden aber besonders große, weiche oder empfindliche ovulierte Eier einiger Störgattungen, beispielsweise *Huso huso, Acipenser transmontanus* oder *Acipenser ruthenus,* eingesetzt, kann noch ein Calcium-Expositionsschritt angeschlossen (oder vorangesetzt) werden:
- zusätzliches Durchführen des Calcium-Expositionsschritts:
   - Herstellen einer anderen 0,5 bis 2 millimolaren Calciumkationen-Lösung aus Calciumchlorid in entionisiertem Wasser mit einer Leitfähigkeit von 10 µS/cm (bei 25°C) und einer Temperatur im polaren Temperaturbereich von 10°C,
   - Einbringen der lebenden, reifen, ovulierten Eier in die andere Lösung für eine Calcium-Expositionszeit von 12 min und
   - Herausnehmen der behandelten ovulierten Eier aus der anderen Lösung und
- kurzes Dippen der behandelten ovulierten Eier in eine 0,9 prozentige, physiologische Kochsalzlösung.

Es bildet sich dadurch zusätzlich zur der elastischen Stabilisierungsschicht aus dem Kalium-Expositionsschritt noch eine strukturelle Proteinvernetzung der Eihülle aus, die bei Fischen und Krebstieren in den bereits vorhandenen Zonen Radiata Interna und Radiata Externa der Eihülle lokalisiert ist. Diese zusätzliche strukturelle Proteinvernetzung der Eihülle durch Tyrosinreste verleiht vor allem großen und vor der Behandlung weichen oder empfindlichen Eiern noch eine plastische Festigkeit - neben der Elastizität aus dem Kalium-Expositionsschritt. Auch hier dient das Dippen wieder der zusätzlichen Kontrollierbarkeit. Bei dem entstandenen Produkt handelt es sich um (echten) Kaviar aus lebenden, reifen ovulierten Eiern, der dann wie folgt weiterverarbeitet werden kann:
- Vermischen des Kaviars mit trockenem, weder Kalium- noch Calciumdonatoren enthaltendem (K⁺- und Ca⁺⁺-freie Rieselhilfen) Kochsalz NaCl (3,5g / 100g Kaviar, 3,5%), was einer Malossol-Salzung zur Konservierung entspricht,
- Abfüllen des leicht gesalzenen Kaviars in Glasbehälter, vorzugsweise 500 g Reifungsgläsern, und luftdichtes Vakuumverschließen der Behälter mit Schraubdeckeln und Etikettieren,
- Lagern der Glasbehälter bei -2°C für 2 bis 4 Monate zur weiteren Reifung des Kaviars und optional
- Einfrieren des frischen Kaviars oder des nach Kundenwunsch gereiften Kaviars in den Glasbehältern bei -18°C.

Die im Kalium-Expositionsschritt behandelten lebenden, reifen, ovulierten Eiern bilden aufgrund der Behandlung eine völlig neue Zone aus: die Stabilisierungsschicht, die elastisch und hyalin (gelartig) ausgebildet ist. Zum Nachweis ist die Stabilisierungsschicht einfach einfärbbar. Sie ist zwischen der Alveolarschicht AL und der Zona Radiata Externa ZRE lokalisiert und wurde bislang in der Literatur nicht beschrieben. Zum strukturellen Aufbau des Eies von Fischen und Krebstieren wird auf die Beschreibungseinleitung mit dem entsprechenden Glossar nach **Siddique** hingewiesen.

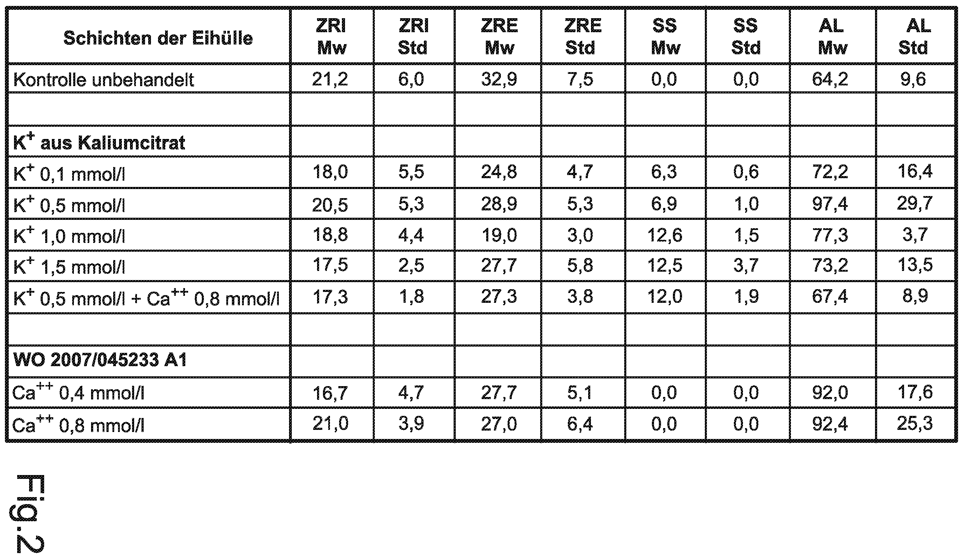

Der Tabelle in der **Fig.** 2 liegen Messungen der Durchmesser (in µm) der extrazellulären Eihülle an reifen, ovulierten Eiern des sibirischen Störs anhand von Kryoschnitten konstanter Schichtdicke (10 µm) mithilfe der computergesteuerten Bildanalyse (Fa. Zeiss) unter dem Einfluss unterschiedlicher Behandlungen zur Stabilisierung der Eihülle zugrunde. Es sind in der Tabelle die Bildung einer neuen Stabilisierungsschicht **SS** und der Durchmesser vorhandener Schichten **(ZRI, ZRE, AL)** der Eihülle unter der Behandlung mit unterschiedlichen Konzentrationszugaben in mmol/I von Kaliumkationen K⁺ allein (aus Kaliumcitrat) und in der Kombination mit Calciumkationen Ca⁺⁺ (aus Calciumchlorid) während der verschiedenen Expositionsschritte nach der Erfindung aufgezeigt. Es wurden lebende, reife, ovulierte Eier vom sibirischen Stör *Acipenser baerii* behandelt. Neben den bereits bei zuvor und bei **Siddique** erläuterten Akronymen bedeutet noch **Mw** Mittelwert, **Std** Standardabweichung. Hinterlegt sind die Werte für die neue elastische Stabilisierungsschicht **SS**. Weiterhin wird Rückbezug auf den Stand der Technik gemäß der oben genannten WO 2007/045233 A1 genommen.

Die Qualitätskontrollen nach den Behandlungen zeigten, dass erst ab Konzentrationen von 1 mmol/I und 1,5 mmol/ l Kaliumkationen eine Dicke der Eihülle von mindestens 12 µm erreicht wird und ein Zwischenprodukt entsteht, dass die Klebrigkeit verloren hat und stabil genug für die weitere Verarbeitung des Kaviars ist. Desweiteren zeigte sich, dass eine Behandlungsdauer von bevorzugt 10 min sinnvoll ist, damit auch alle in der Lösung befindlichen lebenden Eier metabolisch reagieren. Es konnte eine Behandlungsmenge von 2,5 kg Kaviar (in ca. 25 l Lösung) in einer Behandlungseinheit erreicht werden. Die sensorische Prüfung des Kaviars nach der erfindungsgemäßen Behandlung mit Kaliumkationen zeigte, dass die elastische Textur des Kaviars des sibirischen Störs keine Unterschiede bei Konzentrationsvariationen zwischen 1 mmol/I und 1,5 mmol/l aufweist. Dagegen sind die in der einen Lösung mit niedrigeren Kaliumkationen-Konzentrationen behandelten ovulierten Eier unterschiedlich in der Textur und nur einige wenige Eier stabil, während die unbehandelten Eier sehr weich sind und zerplatzen. Gemäß den durchgeführten sensorischen Tests führt eine Behandlung mit zwei Expositionsschritten (Kalium- und Calciumkationen) zu einem festen, perligen Produkt, auch als "Superplop" bei Eiern des sibirischen Störs bezeichnet.

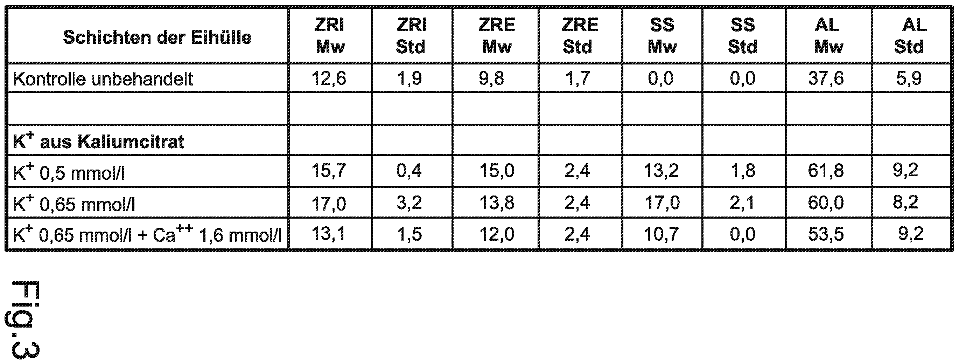

Die Tabelle in **Fig.** 3 zeigt das Vorhandensein und die Durchmesser (in µm) von Schichten der extrazellulären Eihülle mit unterschiedlichen Behandlungen gemäß der Erfindung der lebenden großen Eier vom Belugastör *Huso huso* auf. Auch bei der Behandlung von diesem Kaviar mit Kaliumkationen (aus Kaliumcitrat) wurde die Ausbildung der neuen eosinophilen Stabilisierungsschicht **SS** in der extrazellulären Eihülle beobachtet, die ebenfalls zwischen der **ZRE** und der **AL** lokalisiert ist. Für die großen Eier des Belugastörs zeigten die durchgeführten sensorischen Tests, dass eine Doppelbehandlung mit Kalium- und Calciumkationen zu optimalen Ergebnissen bezüglich der Textur der fragilen lebenden, reifen, ovulierten Eier führt.

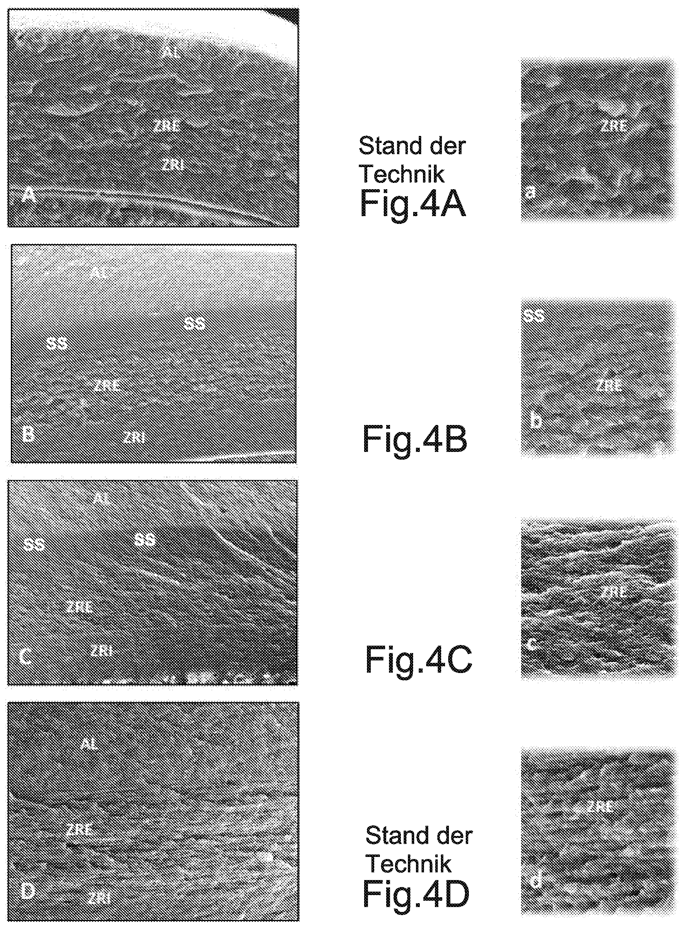

Die **Fig.** 4A, B, C, D zeigen REM-Aufnahmen die Veränderung des Aufbaus der extrazellulären Eihülle von lebenden, reifen, ovulierten Eiern exemplarisch vom sibirischen Stör unter verschiedenen Behandlungen. Es werden zwei Vergrößerungen gezeigt: links 6000fach und rechts (Ausschnitte) 12000fach. Dabei wurden die Behandlungen immer am lebenden Ei durchgeführt, das für die Herstellung von histologische Kryoschnitten zur Bewahrung des nativen Zustandes bei -80°C in Hexan schockgefroren wurde.
- **Fig.** 4A: In unbehandelten reifen, ovulierten Eiern zeigen die Zonen der Eihülle keine klare Abtrennung zueinander (Stand der Technik).
- **Fig.** 4B: Unter dem Einfluss von 0,5 mmol/I Kalium entsteht bereits die neue Stabilisierungsschicht **SS** zwischen der Zona Radiata Externa **ZRE** und der Alveolarschicht **AL,** während die Zona Radiata Interna **ZRI** und Zona Radiata Externa **ZRE** einen unverändert lockeren Proteinverband wie bei unbehandelten Eiern zeigen.
- **Fig.** 4C: Die aufeinanderfolgende Doppelbehandlung der ovulierten Eier mit Kalium- und Calciumkationen zeigt im REM beide charakteristischen morphologischen Merkmale, nämlich die Stabilisierungsschicht **SS** durch die Kaliumbehandlung UND die Verdrillung und Vernetzung der Proteinstränge in der Zona Radiata Interna **ZRI** und der Zona Radiata Externa **ZRE,** welche charakteristisch ist für eine Calciumbehandlung, vergleiche **Fig.** 4D.
- **Fig,** 4D: Eine Calciumbehandlung allein führt zur starken Verdrillung und Vernetzung der lockeren Proteinstränge in der Zona Radiata Interna **ZRI** und der Zona Radiata Externa **ZRE** (Stand der Technik), vergleiche gegen über **Fig.** 4A und **Fig.** 4B ohne Calciumbehandlung.

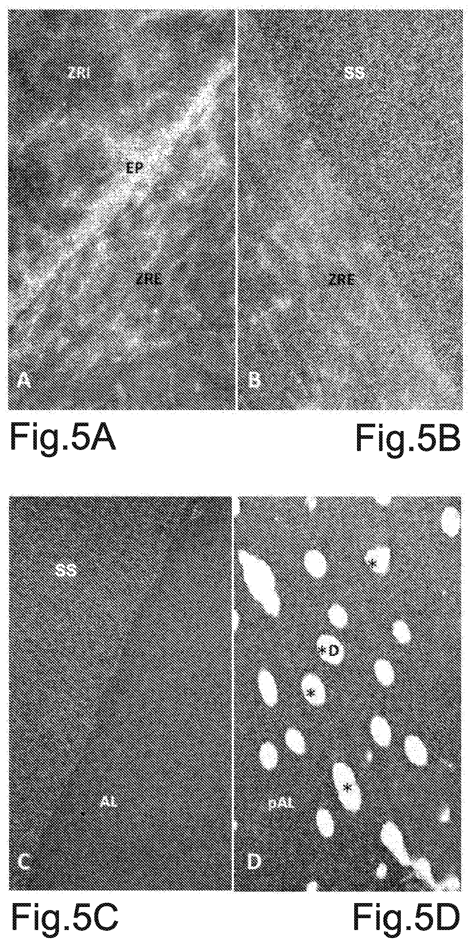

Die **Fig.** 5A, B, C, D zeigen transmissionselektronenmikroskopische Aufnahmen (TEM, 3000-fache Vergrößerung) des mehrschichtigen Aufbaus der Eihülle von reifen Störeiern bei der Behandlung mit 1,0 mmol/I Kaliumkationen. Die **Fig.** 5A zeigt die Zona Radiata Interna **ZRI** mit losen, wolkigen Fibrillen, die durch die Epischicht **EP** von der Zona Radiata Externa **ZRE** separiert ist (Phänomen ist nur ultrastrukturell identifizierbar). Die Zona Radiata Externa **ZRE** ist durch ein filamentöses Netzwerk aus langgestreckten Fibrillen charakterisiert. Die **Fig.** 5B zeigt die ultrastrukturelle Ausbildung der neuen Stabilisierungsschicht **SS** mit einer feingranulären Struktur direkt zwischen der Zona Radiata Externa **ZRE** und - gemäß **Fig.** 5C - der Alveolarschicht **AL,** die zur Peripherie der Eihülle hin - gemäß **Fig.** 5D - von kleinen Duktuli (kleine Gänge, Kanälchen) durchdrungen ist. Die ultrastrukturellen Analysen bestätigen, dass die Behandlung mit Kaliumkationen (1,0 mMol/l) nach der Erfindung zur Bildung einer bislang unbekannten neuen Stabilisierungsschicht **SS** mit amorpher Struktur und Positionierung bei Fischen und Krebstieren zwischen der Zona Radiata Externa **ZRE** und der Alveolarschicht **AL** führt.

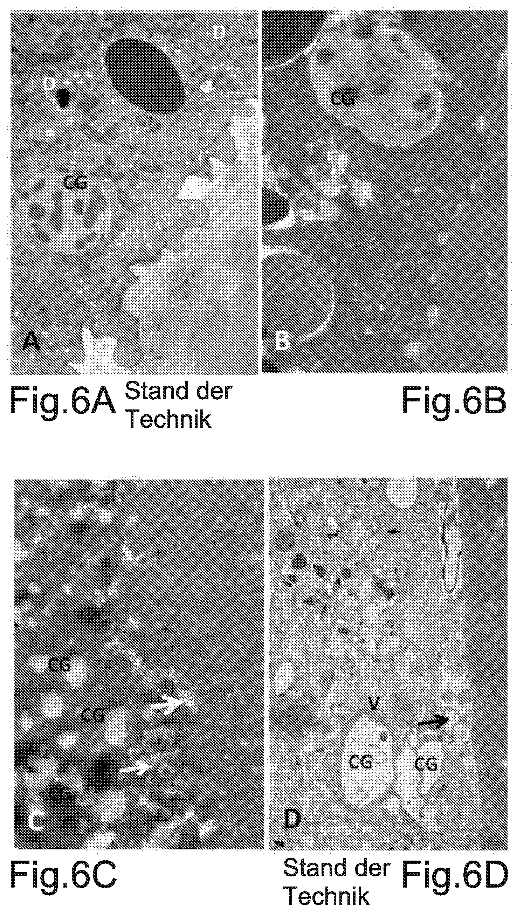

In den **Fig.** 6A, B, C, D sind TEM-Aufnahmen (3000-fache Vergrößerung) der Cortikal Granula **CG** im peripheren Eiplasma innerhalb der Plasmamembran der reifen ovulierten Eier gezeigt, wobei die **Fig.** 6A ein unbehandeltes Ei (Stand der Technik), die **Fig.** 6B ein mit Kaliumkationen behandeltes Ei, die **Fig.** 6C ein mit Kalium- und Calciumkationen behandeltes Ei und die **Fig.** 6D ein nur mit Calciumkationen behandeltes Ei (Stand der Technik) zeigt.

Cortikal Granula sind sekretorische Organellen (strukturell abgrenzbare Bereiche), die in Eiern gefunden werden und eng mit dem Befruchtungsereignis verbunden sind. Cortikale Granula enthalten Enzyme, wie Peroxidase, und Strukturelemente zur Tyrosinvernetzung der Zona Radiata Interna **ZRI** und der Zona Radiata Externa **ZRE.** Wie mithilfe der TEM unter dem Einfluss der verschiedenen Behandlungen analysiert wurde, wird die Cortikal Reaktion und die Entlassung ihres Inhaltes ausschließlich durch die Behandlung mit Calciumkationen ausgelöst. Ein identischer Prozess findet auch bei der natürlichen Befruchtung durch die vom Spermium induzierte Calciumwelle an der Eiplasmamembran statt. Im unbehandelten Ei **(****Fig.** 6A) sind im peripheren Eiplasma die Cortikal Granula **CG** mit ihrer Enzymausstattung klar als große, runde Vesikel (Bläschen) zu erkennen, die auch strukturelle Elemente enthalten. Ebenfalls sind die Cortikal Granula **CG** bei der Kaliumbehandlung allein gemäß der Erfindung **(****Fig.** 6B) nach wie vor unverändert vorhanden. Allerdings ist ein starker vesikulärer Transport an der Eimembran aus dem Eiplasma in die azelluläre Eihülle zu beobachten. In den **Fig.** 6A und **Fig.** 6B ist mit **D** der Dotter bezeichnet. Bei einer Doppelbehandlung mit Kalium- und Calciumkationen **(****Fig.** 6C) kommt es sowohl zur Entlassung (Pfeile) des Inhaltes der Cortikal Granula **CG** und als auch zur Ausbildung der neuen Stabilisierungsschicht **SS**. Die Behandlung mit Calciumkationen allein **(****Fig.** 6D) wiederum führt nur zur Cortikal Reaktion, wobei der Inhalt in die azelluläre Eihülle entlassen wird und die enzymatische Vernetzung der Zona Radiata Interna **ZRI** und Zona Radiata Externa **ZRE** durch Tyrosinreste initiiert. Im Eiplasma verbleiben leere Vakuolen **V.**

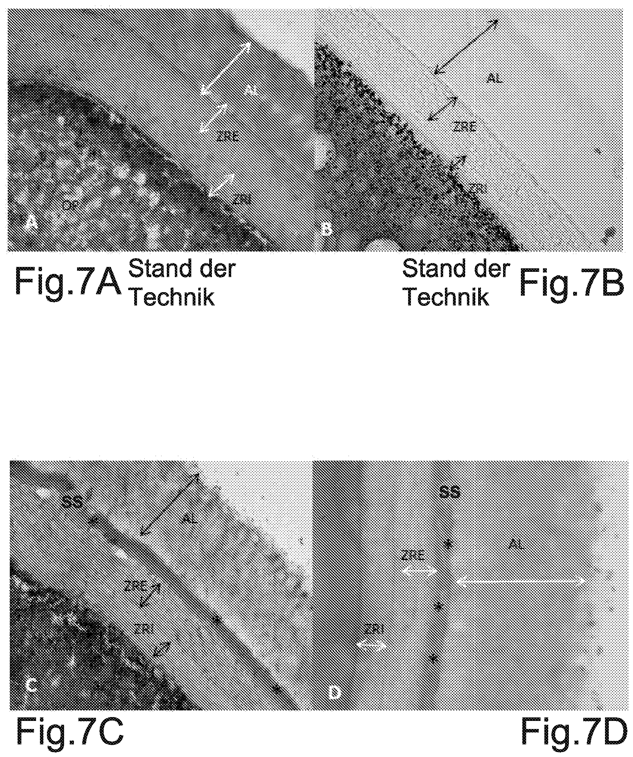

Zum diagnostischen Screening an Kryoschnitten zum Kaliumeffekt bei der Erfindung sind aus dem Stand der Technik in den **Fig.** 7A und **Fig.** 7B lichtmikroskopische Aufnahmen (400 fache Vergrößerung) von unbehandelten lebenden Eiern des sibirischen Störs *Acipenser baerii* aufgezeigt. Das linke Foto gemäß **Fig.** 7A zeigt eine HE-Färbung (Hämatoxylin-Eosin-Färbung), das rechte Foto gemäß **Fig.** 7B zeigt eine Färbung mit Alcianblau. Dieser Test färbt Glucosaminoglykane GAG, Hyaluron und Fibrin an. Zu erkennen ist, dass das Alcianblau in den verschiedenen Schichten der Eihülle fehlt, aber ausgeprägt im Ooplasma **OP** vorhanden ist. Die einzelnen Schichten sind entsprechend den voranstehenden Ausführungen bezeichnet und in ihren Dicken mit Doppelpfeilen gekennzeichnet.

In der **Fig.** 7C und **Fig.** 7D sind dagegen Fotos von Kryoschnitten von mit dem mit der Erfindung beanspruchten Verfahren im Kalium-Expositionsschritt behandelten lebenden, reifen Eiern im ovulierten Zustand des sibirischen Störs *Acipenser baerii* dargestellt. Die Eier wurden mit einer Konzentration von 1,5 mmol/I Kaliumkationen (aus Kaliumcitrat) behandelt. Auffällig ist das Auftreten der neuen Stabilisierungsschicht **SS** zwischen der Zona Radiata Externa **ZRE** und der Alveolarschicht **AL** in der extrazellulären Eihülle. Im linken Foto gemäß **Fig.** 7C zeigt sich nach der Färbung mit Eosin, dass diese neue Stabilisierungsschicht **SS** besonders eosinophil ist. Im rechten Foto gemäß **Fig.** 7D zeigt sich nach der Färbung mit Alcianblau, dass diese neue Stabilisierungsschicht **SS** besonders reich an GAG ist. Daraus lässt sich die besonders vorteilhafte Elastizität der neuen Stabilisierungsschicht **SS** ableiten.

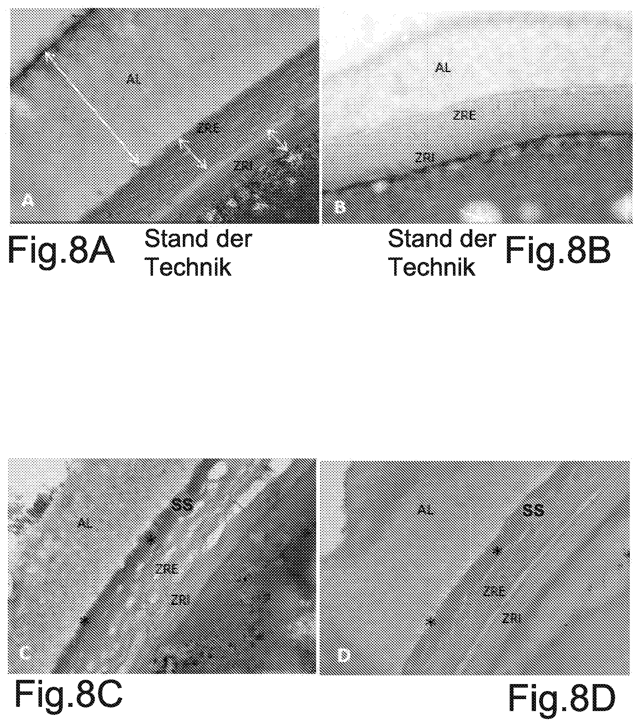

Zum diagnostischen Screening an Kryoschnitten zum Calciumeffekt allein und Doppelbehandlungseffekt durch Kalium- und Calciumkationen sind in den **Fig.** 8A und **Fig.** 8B aus dem Stand der Technik Fotos von Kryoschnitten von mit dem Verfahren gemäß der WO 2007/045233 A1 behandelten reifen Eiern des sibirischen Störs *Acipenser baerii* in 400facher Vergrößerung dargestellt. Das linke Foto gemäß **Fig.** 8A zeigt eine HE-Färbung (Hämatoxylin-Eosin-Färbung), das rechte Foto gemäß **Fig.** 8B zeigt eine Färbung mit Alcianblau. Es wurden die ovulierten Eier des sibirischen Störs behandelt. Im linken Foto gemäß **Fig.** 8A mit der HE-Färbung sind die durch Tyrosinmoleküle vernetzten Proteinstränge in der Zona Radiata Interna **ZRI** und Zona Radiata Externa **ZRE** zu erkennen. Außerdem ist eine deutliche Trennung zwischen beiden Zonen zu erkennen. Durch die Vernetzung ergibt sich eine strukturelle Stabilisierung der Eihülle. Im rechten Foto gemäß **Fig.** 8B mit der Alcianblau-Färbung ist zu erkennen, dass die Zona Radiata Interna **ZRI** und die Zona Radiata Externa **ZRE** nur sehr schwach gefärbt sind, was auf wenig GAG schließen und eine geringere Elastizität schließen lässt, wohingegen im Ooplasma **OP** eine starke Färbung sehr viel GAG anzeigt.

In den **Fig.** 8C und **Fig.** 8D sind Fotos von Kryoschnitten von mit dem beanspruchten Verfahren verarbeiteten lebenden, ovulierten Eiern aufgezeigt, die in dem zusätzlichen Calcium-Expositionsschritt mit dem Verfahren gemäß der WO 2007/045233 A1 behandelt worden sind. Die reifen ovulierten Eier des sibirischen Störs *Acipenser baerii* wurden im Kalium-Expositionsschritt mit 1,5 mmol/l Kaliumkationen (aus Kaliumcitrat) und im Calcium-Expositionsschritt mit 1,6 mmol/l Calciumkationen (aus Calciumchlorid) behandelt. Zusätzlich zu der in den Fotos gemäß **Fig.** 8A und **Fig.** 8B gezeigten verfestigenden Vernetzung der Eihülle ist nunmehr auch die in den Fotos gemäß **Fig.** 8C und **Fig.** 8D aufgezeigte neue hyaline Stabilisierungsschicht **SS** mit ihrer elastischen Stabilisierungsfunktion der Eihülle zu erkennen. Die behandelten lebenden, reifen, ovulierten Eier des sibirischen Störs sind somit sowohl elastisch (durch GAGs) als auch strukturell (durch Proteinvernetzung) stabilisiert und bilden einen perfekten Kaviar.

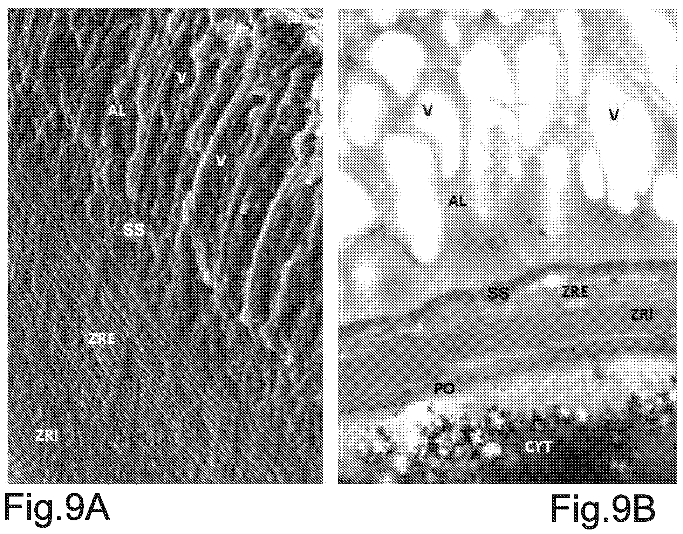

In der **Fig.** 9A ist eine charakteristische REM-Aufnahme (12000-fache Vergrößerung) der Eihülle von lebenden, reifen ovulierten Eiern vom Belugastör *Huso huso* nach der Doppelbehandlung nach der Erfindung dargestellt. Die **Fig.** 9B zeigt eine lichtmikroskopische Aufnahme (400-fache Vergrößerung) der Eihülle von lebenden, reifen, ovulierten Eiern vom Belugastör *Huso huso* nach der Doppelbehandlung nach der Erfindung. Beide Aufnahmen zeigen die neue Stabilisierungsschicht **SS** und die Vernetzung der Zona Radiata Interna **ZRI** und Zona Radiata Externa **ZRE.** Desweiteren fällt auf, dass die Eier des *Huso huso* eine extrem ausgeprägte Alveolarschicht **AL** mit großen Vakuolen **V** besitzen. Das Screening anhand der Kryoschnitte mit H&E-Färbung bestätigt bei der Erfindung die Bildung der neuen elastischen Stabilisierungsschicht **SS** mit einem Kaliumkationen-Expositionsschritt und die zusätzliche Proteinvernetzung in der Eihülle mit zwei Expositionsschritten mit Kalium- und Calciumkationen.

### Bezugszeichenliste

- **AL**: Alveolarschicht
- **Ca⁺⁺**: Calciumkationen
- **CG**: Cortikal Granula
- **CYT**: Zytoplasma (OP)
- **D**: Dotter
- **EP**: Epischicht
- **K⁺**: Kaliumkationen
- **Mw**: Mittelwert
- **OP**: Oozytenplasma (Eiplasma)
- **pAL**: Alveolarschicht (zur Peripherie der Eihülle hin)
- **PO**: Plasmamembran der Oozyte (Eizelle)
- **SS**: Stabilisierungsschicht
- **Std**: Standardabweichung
- **V**: Vakuole
- **ZRI**: Zona Radiata Interna
- **ZRA**: Zona Radiata Externa

## Patentansprüche

1. Verfahren zur Herstellung von Kaviar oder einem kaviarähnlichem Produkt aus lebenden, reifen, ovulierten Eiern von Fischen oder Krebstieren, die in der Eihülle drei oder mehr Schichten aufweisen, wobei sich die lebenden, reifen, ovulierten Eier in einem befruchtungsfähigen, aber unbefruchteten Zustand befinden und einen natürlichen Kaliumgehalt im Eiplasma aufweisen, mittels Behandlung der lebenden, reifen, ovulierten Eier in einer 0,6 prozentigen bis 1,0 prozentigen Kochsalzlösung und anschließend in zumindest einer Lösung, enthaltend Wasser und zumindest eine darin gelöste, eine Stabilisierung der Eihülle der lebenden, reifen, ovulierten Eier bewirkende kationische Komponente,
**dadurch gekennzeichnet, dass** in einem Kalium-Expositionsschritt als kationische Komponente Kalium mit einer Konzentration der Kaliumkationen zwischen 0,1 mmol/l und 3,0 mmol/l im Wasser gelöst ist, wobei das Wasser vor der Zugabe eines Kaliumdonators für die Bildung der kationischen Komponente entionisiert ist und eine im Bereich der natürlichen Laichtemperatur der Fische und Krebstiere liegende Temperatur zwischen 1°C und 29°C aufweist, und dass die lebenden, reifen, ovulierten Eier in der Lösung für eine Kalium-Expositionszeit zwischen 5 min und 30 min behandelt werden, wobei abschließend ein Dippen der lebenden, reifen, ovulierten Eier in einer 0,6 prozentigen bis 1,0 prozentigen Kochsalzlösung durchgeführt wird.

2. Verfahren nach Anspruch 1,
**dadurch gekennzeichnet, dass** als Kaliumdonator zumindest ein Kaliumsalz, bevorzugt das Salz der Zitronensäure und/oder das Salz der Salzsäure und/oder das Salz der Sorbinsäure, eingesetzt ist.

3. Verfahren nach Anspruch 1 oder 2,
**dadurch gekennzeichnet, dass** die Konzentration der Kaliumkationen in der einen Lösung 0,1 mmol/l, 0,5 mmol/l, 0,65 mmol/l, 1,6 mmol/l oder 2,0 mmol/l, bevorzugt 1,0 mmol/l oder 1,5 mmol/l beträgt.

4. Verfahren nach einem der vorangehenden Ansprüche,
**dadurch gekennzeichnet, dass** die Kalium-Expositionszeit im Kalium-Expositionsschritt bei 10 min, 12 min, 15 min, 20 min oder 25 min liegt.

5. Verfahren nach einem der vorangehenden Ansprüche,
**dadurch gekennzeichnet, dass** nach oder vor dem Kalium-Expositionsschritt in einem Calcium-Expositionsschritt in einer anderen Lösung mit Wasser Calcium als kationische Komponente mit einer Konzentration der Calciumkationen zwischen 0,1 mmol/l und 3 mmol/l gelöst ist, wobei das Wasser vor der Zugabe eines Calciumdonators für die Bildung der kationischen Komponente entionisiert ist und eine im Bereich der natürlichen Laichtemperatur der Fische und Krebstiere liegende Temperatur zwischen 1°C und 29°C aufweist, und dass die lebenden, reifen, ovulierten Eier in der Lösung für eine Calcium-Expositionszeit zwischen 9 min und 30 min behandelt werden, wobei abschließend ein Dippen der lebenden, reifen, ovulierten Eier in einer 0,6 prozentigen bis 1,0 prozentigen Kochsalzlösung durchgeführt wird.

6. Verfahren nach Anspruch 5,
**dadurch gekennzeichnet, dass** als Calciumdonator zumindest ein Calciumsalz, bevorzugt Calciumcitrat, Calciumchlorid und/oder Calciumsorbat, eingesetzt ist

7. Verfahren nach Anspruch 5 oder 6,
**dadurch gekennzeichnet, dass** die Konzentration der Calciumkationen in der anderen Lösung 0,5 mmol/l, 0,8 mmol/l, 1,0 mmol/l, 1,5 mmol/l, 1,6 mmol/l oder 2,0 mmol/l beträgt.

8. Verfahren nach einem der Ansprüche 5 bis 7,
**dadurch gekennzeichnet, dass** die Calcium-Expositionszeit im Calcium-Expositionsschritt bei 10 min, 12,5 min, 15 min, 16 min, 20 min oder 25 min liegt.

9. Verfahren nach einem der vorangehenden Ansprüche,
**dadurch gekennzeichnet, dass** die Temperatur der einen Lösung im Kalium-Expositionsschritt und/oder der anderen Lösung im Calcium-Expositionsschritt in einem polaren Temperaturbereich zwischen 1°C und 15°C, bevorzugt zwischen 5°C und 12°C, besonders bevorzugt 10°C, einem gemäßigten Temperaturbereich zwischen 10°C und 20°C, bevorzugt 15°C, besonders bevorzugt 12 °C, oder einem tropischen Temperaturbereich zwischen 20°C und 29°C, bevorzugt 27°C, besonders bevorzugt 21°C, liegt.

10. Verfahren nach einem der vorangehenden Ansprüche,
**dadurch gekennzeichnet, dass** das entionisierte Wasser eine elektrische Leitfähigkeit bei 25°C zwischen 1 µS/cm und 15 µS/cm, bevorzugt 10 µS/cm oder darunter, besonders bevorzugt 1 µS/cm, aufweist.

11. Verfahren nach einem der vorangehenden Ansprüche,
**dadurch gekennzeichnet, dass** die eine und/oder die andere Lösung einen pH-Wert zwischen 6,8 und 8,0, bevorzugt zwischen 7,0 und 7,9, besonders bevorzugt 7,2 oder 7,4 oder 7,5, aufweist.

12. Verfahren nach einem der vorangehenden Ansprüche,
**dadurch gekennzeichnet, dass** anschließend an den zuletzt durchgeführten Expositionsschritt zur Konservierung und Geschmacksintensivierung eine milde Salzung mit bezogen auf eine Menge Kaviar oder Kaviarersatzprodukt 2,0 % bis 3,8 %, bevorzugt 3,5 %, Natriumchlorid durchgeführt wird, wobei das Natriumchlorid frei von Kalium- und Calciumdonatoren ist.

13. Verfahren nach Anspruch 12,
**dadurch gekennzeichnet, dass** anschließend an die Konservierung und Geschmacksintensivierung eine Lagerung des Kaviars oder des kaviarähnlichen Produkts in luftdicht verschlossenen Glasbehältern über mehrere Monate, bevorzugt ein bis drei Monate, bei einer Temperatur zwischen -2°C und -4°C durchgeführt wird.

14. Verfahren nach Anspruch 12 oder 13,
**dadurch gekennzeichnet, dass** anschließend an die Konservierung und Geschmacksintensivierung oder die Lagerung ein Einfrieren des Kaviars oder des kaviarähnlichen Produkts in einem Temperaturbereich zwischen -20°C und -15°C, bevorzugt bei -18°C, durchgeführt wird.

15. Verfahren nach einem der vorangehenden Ansprüche,
**dadurch gekennzeichnet, dass** lebende, reife, ovulierte Eier von Fischen oder Krebstieren mit einem Polarisationsindex PI mit 0,05 ≤ PI ≤ 0,15, bevorzugt 0,05 ≤ PI ≤ 0,12, behandelt werden.

16. Verfahren nach einem der vorangehenden Ansprüche,
**dadurch gekennzeichnet, dass** lebende, reife, ovulierte Eier von Fischen oder Krebstieren aus Wildfängen oder aus Aquakulturzucht, die in ovuliertem Zustand durch Ablaichen oder Abstreifen geerntet wurden, behandelt werden.

17. Verfahren nach Anspruch 16,
**dadurch gekennzeichnet, dass** lebende, reife, ovulierte Eier von rezenten und urtümlichen Knochenfischen, bevorzugt von Störartigen, oder lebende, reife Eier von Krebstieren, bevorzugt von Hummern, behandelt werden.

18. Verfahren nach einem der vorangehenden Ansprüche 6 bis 17,
**dadurch gekennzeichnet, dass** sehr große lebende, reife, ovulierte Eier mit einer Korngröße gleich oder größer 3,2 mm Durchmesser oder weiche, instabile lebende, reife, ovulierte (25/1/9) Eier mit einer Belastbarkeit bis zum Zerplatzen kleiner oder gleich 0,3 N behandelt werden.

19. Verfahren nach einem der vorangehenden Ansprüche,
**dadurch gekennzeichnet, dass** die Kochsalzlösung eine 0,9 prozentige Kochsalzlösung ist.

20. Kaviar oder kaviarähnliches Produkt aus lebenden, reifen, ovulierten Eiern von Fischen oder Krebstieren, die in der Eihülle drei oder mehr Schichten aufweisen, wobei sich die lebenden, reifen, ovulierten Eier in einem befruchtungsfähigen, aber unbefruchteten Zustand befinden, einen natürlichen Kaliumgehalt im Eiplasma aufweisen,
**dadurch gekennzeichnet, dass** in der Eihülle eine elastische Stabilisierungsschicht (SS) zwischen der Zona Radiata Interna (ZRI) und der Alveolarschicht (AL), bevorzugt zwischen der Zona Radiata Externa (ZRE) und der Alveolarschicht (AL), ausgebildet ist, die eosinophile und hyaline Eigenschaften aufweist und in die Glucosaminoglykane eingelagert sind.

21. Kaviar oder kaviarähnliches Produkt nach Anspruch 20,
**dadurch gekennzeichnet, dass** in der Eihülle in der Zona Radiata Interna (ZRI) und in der Zona Radiata Externa (ZRE) zusätzlich eine irreversible Vernetzung von Proteinsträngen durch eingebaute Tyrosin-Moleküle ausgebildet ist.

## Claims

1. A method for producing caviar or a caviar-like product from live, mature, ovulated eggs from fish or crustaceans which have three or more layers in the egg envelope, wherein the live, mature, ovulated eggs are in a fertile but unfertilised state and have a natural potassium content in the egg plasma, by treatment of the live, mature, ovulated eggs in a 0.6 percent to 1.0 percent saline solution and subsequently in at least one solution containing water and at least one cationic component dissolved therein which acts to stabilise the egg envelope of the live, mature, ovulated eggs,
**characterized in that** in a potassium exposure step, potassium is dissolved in water as the cationic component in a concentration of potassium cations of between 0.1 mmol/l and 3.0 mmol/l, wherein prior to the addition of a potassium donor for the formation of the cationic component, the water is deionised and is at a temperature in the natural spawning temperature range for the fish and crustaceans of between 1°C and 29°C, and **in that** the live, mature, ovulated eggs are treated in the solution for a potassium exposure time of between 5 min and 30 min, wherein finally, dipping of the live, mature, ovulated eggs is carried out in a 0.6 percent to 1.0 percent saline solution.

2. The method as claimed in claim 1,
**characterized in that** the potassium donor employed is at least one potassium salt, preferably the salt of citric acid and/or the salt of hydrochloric acid and/or the salt of sorbic acid.

3. The method as claimed in claim 1 or claim 2,
**characterized in that** the concentration of the potassium cations in the one solution is 0.1 mmol/l, 0.5 mmol/l, 0.65 mmol/l, 1.6 mmol/l or 2.0 mmol/l, preferably 1.0 mmol/l or 1.5 mmol/l.

4. The method as claimed in one of the preceding claims,
**characterized in that** the potassium exposure time in the potassium exposure step is between 10 min, 12 min, 15 min, 20 min or 25 min.

5. The method as claimed in one of the preceding claims,
**characterized in that** after or before the potassium exposure step, in a calcium exposure step in another solution, calcium is dissolved in water as the cationic component in a concentration of the calcium cations of between 0.1 mmol/l and 3 mmol/l, wherein prior to the addition of a calcium donor for the formation of the cationic component, the water is deionised and is at a temperature of between 1°C and 29°C which is in the natural spawning temperature range for fish and crustaceans, and **in that** the live, mature, ovulated eggs are treated in the solution for a calcium exposure time of between 9 min and 30 min, wherein finally, dipping of the live, mature, ovulated eggs is carried out in a 0.6 percent to 1.0 percent saline solution.

6. The method as claimed in claim 5,
**characterized in that** the calcium donor employed is at least one calcium salt, preferably calcium citrate, calcium chloride and/or calcium sorbate.

7. The method as claimed in claim 5 or claim 6,
**characterized in that** the concentration of the calcium cations in the other solution is 0.5 mmol/l, 0.8 mmol/l, 1.0 mmol/l, 1.5 mmol/l, 1.6 mmol/l or 2.0 mmol/l.

8. The method as claimed in one of claims 5 to 7,
**characterized in that** the calcium exposure time in the calcium exposure step is 10 min, 12.5 min, 15 min, 16 min, 20 min or 25 min.

9. The method as claimed in one of the preceding claim,
**characterized in that** the temperature of the one solution in the potassium exposure step and/or of the other solution in the calcium exposure step in a polar temperature range is between 1°C and 15°C, preferably between 5°C and 12°C, particularly preferably 10°C, in a moderate temperature range is between 10°C and 20°C, preferably 15°C, particularly preferably 12°C, or in a tropical temperature range is between 20°C and 29°C, preferably 27°C, particularly preferably 21°C.

10. The method as claimed in one of the preceding claims,
**characterized in that** the deionised water has an electrical conductivity at 25°C of between 1 µS/cm and 15 µS/cm, preferably 10 µS/cm or below, particularly preferably 1 µS/cm.

11. The method as claimed in one of the preceding claims,
**characterized in that** the one and/or the other solution has a pH of between 6.8 and 8.0, preferably between 7.0 and 7.9, particularly preferably 7.2 or 7.4 or 7.5.

12. The method as claimed in one of the preceding claims,
**characterized in that** subsequent to the last exposure step carried out for the purposes of preservation and flavour intensification, mild salting is carried out with 2.0% to 3.8%, preferably 3.5% sodium chloride with respect to the quantity of caviar or caviar substitute product, wherein the sodium chloride is free from potassium and calcium donors.

13. The method as claimed in claim 12,
**characterized in that** subsequent to the preservation and flavour intensification, storage of the caviar or caviar-like product is carried out in hermetically sealed glass containers over several months, preferably one to three months, at a temperature between -2°C and -4°C.

14. The method as claimed in claim 12 or claim 13,
**characterized in that** subsequent to the preservation and flavour intensification or storage, the caviar or the caviar-like product is frozen at a temperature in the range between -20°C and -15°C, preferably at -18°C.

15. The method as claimed in one of the preceding claims,
**characterized in that** live, mature, ovulated eggs from fish or crustaceans with a polarization index "PI" of 0.05 ≤ PI ≤ 0.15, preferably 0.05 ≤ PI ≤ 0.12, are treated.

16. The method as claimed in one of the preceding claims,
**characterized in that** live, mature, ovulated eggs from fish or crustaceans caught in the wild or from aquaculture farming and which are harvested in an ovulated state by spawning or stripping are treated.

17. The method as claimed in claim 16,
**characterized in that** live, mature, ovulated eggs from recent and primitive bony fish, preferably from sturgeon species, or live, mature eggs from crustaceans, preferably from lobsters, are harvested.

18. The method as claimed in one of the preceding claims 6 to 17,
**characterized in that** very large live, mature, ovulated eggs with a grain size of greater than or equal to 3.2 mm in diameter or soft, unstable, live, mature, ovulated eggs with a load before bursting of less than or equal to 0.3 N are treated.

19. The method as claimed in one of the preceding claims,
**characterized in that** the saline solution is a 0.9 percent saline solution.

20. A caviar or caviar-like product from live, mature, ovulated eggs from fish or crustaceans which have three or more layers in the egg envelope, wherein the live, mature, ovulated eggs are in a fertile but unfertilised state and have a natural potassium content in the egg plasma,
**characterized in that** an elastic stabilizing layer (SL) is formed in the egg envelope between the zona radiata interna (ZRI) and the alveolar layer (AL), preferably between the zona radiata externa (ZRE) and the alveolar layer (AL), and has eosinophilic and hyalinic properties and is incorporated into the glucosaminoglycans.

21. The caviar or caviar-like product as claimed in claim 20,
**characterized in that** in addition, an irreversible cross-linking of protein strands by integrated tyrosine molecules develops in the egg envelope in the zona radiata interna (ZRI) and in the zona radiata externa (ZRE).

## Revendications

1. Procédé, destiné à produire du caviar ou un produit analogue à du caviar, à partir d'œufs vivants, ovulés, arrivés à maturité de poissons ou de crustacés, qui dans l'enveloppe de l'œuf comportent trois couches ou plus, les œufs vivants, ovulés, arrivés à maturité se trouvant dans un état fécondable, mais non fécondé, et comportant dans le plasma de l'œuf une teneur naturelle en potassium, par un traitement des œufs vivants, ovulés, arrivés à maturité dans une solution saline à de 0,6 pour cent à 1,0 pour cent et par la suite dans au moins une solution contenant de l'eau et au moins un composant cationique dissous dans celle-ci, provoquant une stabilisation de l'enveloppe de l'œuf des œufs vivants, ovulés, arrivés à maturité,
**caractérisé en ce que** dans une étape d'exposition au potassium au titre de composant cationique, du potassium d'une concentration des cations de potassium comprise entre 0,1 mmole/l et 3,0 mmoles/l est dissous dans l'eau, avant l'ajout d'un donneur de potassium, l'eau étant désionisée pour la formation du composant cationique et présentant une température située dans l'ordre de la température naturelle de frai des poissons et crustacés, comprise entre 1 °C et 29 °C et **en ce que** l'on traite les œufs vivants, ovulés, arrivés à maturité dans la solution pour un temps d'exposition au potassium compris entre 5 minutes et 30 minutes, étant procédé pour terminer à un trempage des œufs vivants, ovulés, arrivés à maturité dans une solution saline à de 0,6 pour cent à 1,0 pour cent.

2. Procédé selon la revendication 1,
**caractérisé en ce que** l'on met en œuvre au titre de donneur de potassium au moins un sel de potassium, de préférence le sel de l'acide citrique et / ou le sel de l'acide chlorhydrique et / ou le sel de l'acide sorbique.

3. Procédé selon la revendication 1 ou 2,
**caractérisé en ce que** la concentration des cations de potassium dans l'une solution s'élève à 0,1 mmole/l, à 0,5 mmole/l, à 0,65 mmole/l, à 1,6 mmole/l ou à 2,0 mmoles/l, de préférence à 1,0 mmole/l ou à 1,5 mmole/I.

4. Procédé selon l'une quelconque des revendications précédentes,
**caractérisé en ce que** le temps d'exposition au potassium au cours de l'étape d'exposition au potassium se situe à environ 10 minutes, 12 minutes, 15 minutes, 20 minutes ou 25 minutes.

5. Procédé selon l'une quelconque des revendications précédentes,
**caractérisé en ce qu'**après ou avant l'étape d'exposition au potassium, dans une étape d'exposition au calcium, dans une autre solution, du calcium au titre de composant cationique avec une concentration des cations de calcium comprise entre 0,1 mmole/l et 3 mmoles/l est dissous dans de l'eau, avant l'ajout d'un donneur de calcium, l'eau étant désionisée pour la formation du composant cationique et présentant une température située dans l'ordre de la température naturelle de frai des poissons et crustacés, située entre 1 °C et 29 °C et **en ce que** l'on traite les œufs vivants, arrivés à maturité, ovulés dans la solution pour un temps d'exposition au calcium compris entre 9 minutes et 30 minutes, étant procédé pour terminer à un trempage des œufs vivants, ovulés, arrivés à maturité dans une solution saline à de 0,6 pour cent à 1,0 pour cent.

6. Procédé selon la revendication 5,
**caractérisé en ce qu'**au titre de donneur de calcium, l'on met en œuvre au moins un sel de calcium, de préférence un citrate de calcium, un chlorure de calcium et / ou un sorbate de calcium.

7. Procédé selon la revendication 5 ou 6,
**caractérisé en ce que** la concentration des cations de calcium dans l'autre solution s'élève à 0,5 mmole/l, à 0,8 mmole/l, à 1,0 mmole/l, à 1,5 mmole/l, à 1,6 mmole/l ou à 2,0 mmoles/l.

8. Procédé selon l'une quelconque des revendications 5 à 7,
**caractérisé en ce que** le temps d'exposition au calcium au cours de l'étape d'exposition au calcium se situe à environ 10 minutes, 12,5 minutes, 15 minutes, 16 minutes, 20 minutes ou 25 minutes.

9. Procédé selon l'une quelconque des revendications précédentes,
**caractérisé en ce que** la température de l'une solution dans l'étape d'exposition au potassium et / ou de l'autre solution dans l'étape d'exposition au calcium se situe dans un ordre de températures polaires compris entre 1 °C et 15 °C, de manière préférentielle, entre 5 °C et 12 °C, de manière particulièrement préférentielle de 10 °C, dans un ordre de températures modérées compris entre 10 °C et 20 °C, de manière préférentielle de 15 °C, de manière particulièrement préférentielle de 12 °C, ou dans un ordre de températures tropicales compris entre 20 °C et 29 °C, de manière préférentielle de 27 °C, de manière particulièrement préférentielle de 21 °C.

10. Procédé selon l'une quelconque des revendications précédentes,
**caractérisé en ce que** l'eau désionisée fait preuve d'une conductibilité électrique à 25 °C comprise entre 1 µS/cm et 15 µS/cm, de manière préférentielle de 10 µS/cm ou moins, de manière particulièrement préférentielle de 1 µS/cm.

11. Procédé selon l'une quelconque des revendications précédentes,
**caractérisé en ce que** l'une et / ou l'autre solution présentent une valeur pH comprise entre 6,8 et 8,0, de manière préférentielle comprise entre 7,0 et 7,9, de manière particulièrement préférentielle de 7,2 ou de 7,4 ou de 7,5.

12. Procédé selon l'une quelconque des revendications précédentes,
**caractérisé en ce qu'**à la suite de la dernière étape d'exposition réalisée, à des fins de conservation et d'intensification du goût, l'on procède à un salage doux avec 2,0 % à 3,8 %, de manière préférentielle 3,5 % de chlorure de sodium en rapport à une quantité de caviar ou de succédané de caviar, le chlorure de sodium étant exempt de donneurs de potassium et de calcium.

13. Procédé selon la revendication 12,
**caractérisé en ce que** suite à la conservation et à l'intensification du goût, l'on procède à un stockage du caviar ou du produit analogue au caviar sur plusieurs mois, de manière préférentielle sur un à trois mois, à une température comprise entre -2 °C et -4 °C dans des récipients de verre fermés de manière étanche à l'air.

14. Procédé selon la revendication 12 ou 13,
**caractérisé en ce que** suite à la conservation et à l'intensification du goût ou au stockage, l'on procède à une congélation du caviar ou du produit analogue au caviar dans un ordre de température compris entre -20 °C et -15 °C, de manière préférentielle à environ -18 °C.

15. Procédé selon l'une quelconque des revendications précédentes,
**caractérisé en ce que** l'on traite des œufs vivants, arrivés à maturité, ovulés de poissons ou de crustacés avec un indice de polarisation PI avec 0,05 ≤ PI ≤ 0,15, de manière préférentielle 0,05 ≤ PI ≤ 0,12.

16. Procédé selon l'une quelconque des revendications précédentes,
**caractérisé en ce que** l'on traite des œufs vivants, arrivés à maturité, ovulés de poissons ou de crustacés provenant de pêches en milieux sauvages ou d'élevages en aquaculture, qui ont été récoltés à l'état ovulé par frayage ou par raclement.

17. Procédé selon la revendication 16,
**caractérisé en ce que** l'on traite des œufs vivants, arrivés à maturité, ovulés d'ostéichthyens récents et originels, de manière préférentielle d'esturgeons ou des œufs vivants, arrivés à maturité de crustacés, de manière préférentielle de homards.

18. Procédé selon l'une quelconque des revendications précédentes 6 à 17,
**caractérisé en ce que** l'on traite de très grands œufs vivants, arrivés à maturité, d'une grosseur de grain d'un diamètre supérieur ou égal à 3,2 mm ou des œufs mous instables, vivants, ovulés (25/1/9) d'une capacité de charge jusqu'à l'éclatement inférieure ou égale à 0,3 N.

19. Procédé selon l'une quelconque des revendications précédentes,
**caractérisé en ce que** la solution saline est une solution saline à 0,9 pour cent.

20. Caviar ou produit analogue au caviar, conçu à partir d'œufs vivants, arrivés à maturité, ovulés de poissons ou de crustacés, qui comportent dans l'enveloppe de l'œuf trois couches ou plus, les œufs vivants, ovulés, arrivés à maturité se trouvant dans un état fécondable, mais non fécondé, et comportant dans le plasma de l'œuf une teneur naturelle en potassium,
**caractérisé en ce que** dans l'enveloppe de l'œuf, est constituée entre la zona radiata interna (ZRI) et la couche alvéolaire (AL), de manière préférentielle entre la zona radiata externa (ZRE) et la couche alvéolaire(AL) une couche de stabilisation (SS) élastique qui présente des propriétés éosinophiles et hyalines et dans laquelle sont stockés des glycosaminoglycanes.

21. Caviar ou produit analogue au caviar selon la revendication 20,
**caractérisé en ce que** dans l'enveloppe de l'œuf est constitué en supplément dans la zona radiata interna (ZRI) et dans la zona radiata externa (ZRE) une réticulation irréversible de complexes protéiques par des molécules de tyrosine incorporées.
